# EUROPÄISCHE PATENTSCHRIFT

(11) **EP 2 291 298 B1**
(45) Veröffentlichungstag und Bekanntmachung des Hinweises auf die Patenterteilung: **11.03.2015**
(21) Anmeldenummer: 09745846.7
(22) Anmeldetag: 18.05.2009
(51) Int. Cl.: B60N 2/235

(54) **BESCHLAGANORDNUNG FÜR EINEN SITZ, INSBESONDERE FAHRZEUGSITZ SOWIE VERFAHREN ZUR MONTAGE EINER SOLCHEN BESCHLAGANORDNUNG**
FIXTURE ARRANGEMENT FOR A SEAT, IN PARTICULAR A VEHICLE SEAT, AND METHOD FOR MOUNTING SUCH A FIXTURE ARRANGEMENT
SYSTÈME DE GARNITURE POUR SIÈGE, EN PARTICULIER SIÈGE DE VÉHICULE AUTOMOBILE, ET PROCÉDÉ DE MONTAGE DE CE SYSTÈME DE GARNITURE

(30) Priorität: 16.05.2008 DE 102008024056; 12.09.2008 DE 102008047660; 10.12.2008 DE 102008061691
(43) Veröffentlichungstag der Anmeldung: 09.03.2011
(73) Patentinhaber: Brose Fahrzeugteile GmbH & Co. KG, Coburg, 96450 Coburg (DE)
(72) Erfinder: FAßBENDER, Frank, 96450 Coburg (DE); STEFFEN, Oliver, 96450 Coburg (DE)
(74) Vertreter: Schröder, Christoph
(86) Internationale Anmeldenummer: PCT/EP2009/056005
(87) Internationale Veröffentlichungsnummer: WO 2009/138514

(56) Entgegenhaltungen:
- WO-A1-2004/082981
- WO-A1-2006/105657
- DE-A1-102006 009 715
- DE-A1-102007 051 842

## Beschreibung

Die Erfindung betrifft eine Beschlaganordnung für einen Sitz, insbesondere für einen Fahrzeugsitz sowie ein Verfahren zur Montage einer Beschlaganordnung.

Eine Beschlaganordnung für einen Sitz, insbesondere für einen Kraftfahrzeugsitz umfasst üblicherweise zwei Beschläge, die jeweils seitlich am Sitz angeordnet sind und über die jeweils ein Sitzelement mit einem Lehnenelement verbunden ist derart, dass eine Neigungsverstellung des Lehnenelements ermöglicht ist. Sind die Beschläge als so genannte Rastbeschläge ausgebildet, so müssen die Beschläge zur Neigungsverstellung aus einer Schließ- oder verrasteten Position in eine Freigabeposition gebracht werden.

Die Rastbeschläge weisen üblicherweise zwei Beschlagteile auf, die zum einen am Lehnenelement und zum anderen am Sitzelement mechanisch befestigt und gegeneinander drehbar gelagert sind. Zur Verriegelung in der Schließstellung sind üblicherweise Riegelelemente vorgesehen. Diese sind beispielsweise in radialer Richtung an dem einen Beschlagteil verschieblich gelagert und werden gegen das zweite Beschlagteil in eine Sperrposition verschoben. In der Sperrposition greifen beispielsweise Verzahnungen der Riegelelemente und des zweiten Beschlagteils ineinander. Zur Entriegelung werden die Riegelelemente in radialer Richtung zurückgezogen, so dass die Verzahnungen außer Eingriff kommen und eine Drehbewegung der beiden Beschlagteile zueinander und somit eine Neigungsverstellung möglich ist. Diese Entriegelung wird beispielsweise durch einen seitlich am Sitz angebrachten Betätigungshebel bewirkt. Ein derartiger Rastbeschlag ist beispielsweise aus der EP 1 066 170 B2 zu entnehmen.

Für die Betätigung der verstellbaren Riegelelemente ist üblicherweise ein Antriebselement vorgesehen, das beispielsweise eine Nockenscheibe mit exzentrisch angeordneten Nocken umfasst und auf einer Welle drehfest angeordnet ist. Die Welle wird über den Betätigungshebel verdreht. Durch die exzentrische Anordnung der Nocken erfolgt eine Betätigung der Riegel in bzw. aus deren Schließstellung.

Bei einem Kraftfahrzeug ist der Betätigungshebel regelmäßig außenseitig auf der Türseite angeordnet. An der gegenüberliegenden zum jeweils benachbarten Sitz (Fahrersitz bzw. Beifahrersitz) orientierten Seite, der so genannten Tunnelseite, ist daher lediglich ein Beschlag ohne Betätigungshebel angeordnet. Insgesamt sind daher bei einem Kraftfahrzeug vier unterschiedliche Beschläge erforderlich, was zu einem relativ großen Aufwand in der Lagerhaltung und Bereitstellung bei der Montage führt.

Aus sicherheitstechnischen Überlegungen heraus muss bei einem Fahrzeugsitz zudem gewährleistet sein, dass die beiden Rastbeschläge weitgehend synchron zueinander montiert sind, d.h. dass sie bei einer definierten Stellung der Welle in einer identischen Schließ- oder Freigabeposition angeordnet sind. Gleichzeitig soll jedoch auch der Betätigungshebel aus Komfort- und Designgründen in einer definierten Winkelstellung orientiert sein. Aufgrund dieser Anforderung ist die Montage einer derartigen Beschlaganordnung mit vergleichsweise großem Aufwand verbunden.

Bei einer aus der DE 10 2006 009 715 A1 bekannten Beschlaganordnung mit zwei Beschlägen sind Antriebselemente der Beschläge über eine Welle miteinander verbunden, und eine Buchse ist in ein Antriebselement in Form eines Nockens formschlüssig eingefügt.

Aus der DE 10 2007 051 842 A1 ist eine Beschlaganordnung bekannt, bei der ähnlich wie bei der DE 10 2006 009 715 A1 eine Buchse in Form einer an einer Welle eangeordneten Muffe formschlüssig in ein Antriebselement eingefügt ist.

Bei einer aus der WO 2004/082981 A1 bekannten Beschlaganordnung werden zwei Enden eine Welle über identische Formprofilteile durch spanenends Einpressen mit jeweils einem Antriebselement eines Beschlags verbunden, um die Welle in einem ersten Schritt in eine gewünschte Drehposition zu den Antriebselementen zu bringen und erst in einem zweiten Schritt mit den Antriebselementen drehfest zu verbinden.

Bei einer aus der WO 2006/105657 A1 bekannten Beschlaganordnung greift eine Welle formschlüssig in Antriebselemente zweier Beschläge ein.

Der Erfindung liegt die Aufgabe zugrunde, den Aufwand für die Montage einer derartigen Beschlaganordnung bei Erfüllung der Anforderungen zu vereinfachen.

Die Aufgabe wird gelöst durch eine Beschlaganordnung mit den Merkmalen des Patentanspruchs 1.

Die Beschlaganordnung weist einen ersten und einen zweiten Beschlag, insbesondere Rastbeschläge auf, die jeweils ein erstes, tunnelseitiges, und ein zweites, türseitiges Antriebselement umfassen. Die Antriebselemente sind hierbei vorzugsweise als Nockenscheiben mit Exzenternocken ausgebildet oder umfassen zumindest eine derartige Nockenscheibe. Die Antriebselemente dienen allgemein zum Verstellen eines Riegelelements des Rastbeschlags. Die Antriebselemente weisen jeweils eine Ausnehmung mit einer Innenkontur auf. Weiterhin umfasst die Beschlaganordnung eine die beiden Beschläge verbindende Welle, die insbesondere als Hohlwelle ausgebildet ist, sowie ein Verstellelement, das zur Betätigung (Entriegelung) der Beschläge dient. Die Welle weist ein erstes, tunnelseitiges Ende mit einer Außenkontur zum formschlüssigen Einstecken in das erste, tunnelseitige Antriebselement und ein zweites, türseitiges Ende auf. Dieses ist im Wesentlichen zylindrisch ausgebildet. Von besonderer Bedeutung ist hierbei, dass die Welle mit dem tunnelseitigen Ende formschlüssig und damit drehfest in das erste Antriebselement eingesteckt ist. Gleichzeitig ist die Welle mit ihrem zweiten zylindrischen Ende zunächst noch nicht drehfest mit dem zweiten Antriebselement verbunden. Das türseitige Ende ist abweichend von dem tunnelseitigen Ende nicht zum formschlüssigen Einstecken in das Antriebselement ausgebildet, weist also keine an die Innenkontur angepasste Außenkontur auf. Diese spezielle Ausgestaltung ermöglicht es, dass in einer Zwischenmontageposition das türseitige Antriebselement, das türseitige Ende der Welle und das Verstellelement zunächst in einer beliebigen Drehposition zueinander positionierbar sind, also relativ zueinander verdreht werden können, so dass diese drei Bauteile, insbesondere das Verstellelement, in der gewünschten Drehposition orientiert sind. Schließlich sind Mittel zur Fixierung dieser gewünschten und eingestellten Drehposition zwischen der Welle, dem türseitigen Antriebselement und dem Verstellelement vorgesehen, so dass in einer Endmontageposition die beiden Antriebselemente, die Welle und das Verstellelement drehfest miteinander verbunden sind. Die Drehposition der Welle ist hierbei durch die formschlüssige Verbindung auf Seiten des ersten Antriebselements festgelegt.

Der besondere Vorteil dieser Anordnung ist darin zu sehen, dass die beiden Beschläge, also sowohl der tunnelseitige als auch der türseitige Beschlag, einen zumindest weitgehend identischen Aufbau aufweisen können. Erst bei der Montage erfolgt die Festlegung, für welchen Sitz und für welche Seite des jeweiligen Sitzes der Beschlag herangezogen wird. Aufgrund dieses Gleichteileprinzips sind daher die Lagerhaltung und die Disposition des Materialflusses bis zur Endmontage deutlich vereinfacht.

Durch die freie Relativdrehbarkeit der Welle bezüglich des türseitigen Antriebselements ist gewährleistet, dass dieses bei der Montage nicht aus seiner definierten Stellung verdreht wird. Dadurch bleiben bei der Montage die beiden Antriebselemente der beiden Beschläge in einer definierten, einheitlichen Position. Diese definierte Position der Antriebselemente wird beispielsweise beim Zusammenbau der Beschläge festgelegt und ist vorzugsweise die Schließposition der Beschläge. Hierdurch ist insgesamt eine Synchronisation der Position der Antriebselemente und damit der Schließstellung der Rastbeschläge sichergestellt.

Durch die freie Relativdrehbeweglichkeit des Verstellelements kann zudem auch dieses in die gewünschte Drehstellung gebracht werden, bevor es fest mit der Welle und dem Antriebselement verbunden wird.

Im Sinne des Gleichteileprinzips sind gemäß einer zweckdienlichen Ausgestaltung die Ausnehmungen der Antriebselemente, in die die Welle mit Ihren unterschiedlich ausgebildeten Enden eingesteckt wird, identisch ausgebildet, weisen also die identische Innenkontur auf. Insbesondere sind die Antriebselemente insgesamt bzw. die Nockenscheiben identisch ausgebildet.

Für die Ausgestaltung der formschlüssigen Einsteckverbindung auf der Tunnelseite ist die Innenkontur der Antriebselemente in einer bevorzugten Ausgestaltung unrund und insbesondere nach Art eines Mehrkants ausgebildet. Unter Mehrkant wird hier allgemein eine Ausgestaltung verstanden, wie sie bei so genannten Innenmehrkantschrauben bekannt ist. Die Ausnehmung kann hierbei eine polygonale Querschnittsfläche, beispielsweise eine dreieckige, viereckige oder hexagonale Querschnittsfläche aufweisen. Unter Mehrkantausgestaltung, wird insbesondere eine Ausgestaltung angesehen, bei der die Ausnehmung ausgehend von einer vorzugsweise kreisrunden Geometrie umfangsseitig einzelne diskrete, beispielsweise rechteckförmige oder trapezförmige Taschen oder Ausbuchtungen aufweist.

Gemäß einer zweckdienlichen Weiterbildung ist auf einer der beiden Beschlagseiten eine Axialsicherung für die Welle vorgesehen, die ein axiales Verrutschen der Welle verhindert. Diese ist vorzugsweise auf der Türseite und insbesondere automatisch durch die drehfeste Verbindung zwischen der Welle, dem zweiten Antriebselement und dem Verstellelement ausgebildet. An der gegenüberliegenden Tunnelseite ist vorzugsweise keine Axialsicherung vorgesehen. Vielmehr liegt an dieser Stelle die Welle mit ihrem tunnelseitigen Ende mit gewissem axialem Spiel, also lose, in dem tunnelseitigen Antriebselement ein. Insoweit ist auf der Tunnelseite für die Welle ein Loslager und auf der Türseite ein Festlager gebildet.

In einer bevorzugten Ausgestaltung ist das Verstellelement als ein Adapterbolzen ausgebildet, welcher wiederum für die Anordnung eines Betätigungshebels ausgebildet ist. Über den Betätigungshebel erfolgt die manuelle Betätigung mit der Hand des Nutzers. Der Adapterbolzen stellt daher eine modell- oder kundenspezifische Schnittstelle dar und definiert die Anschlussmöglichkeit für einen jeweiligen modell- oder kundenspezifischen Betätigungshebel. Erst durch den Adapterbolzen erfolgt eine kundenspezifische Anpassung. Dies ermöglicht daher, über die unterschiedlichsten Modelle hinweg die identischen Beschläge im Sinne eines Gleichteileprinzips einzusetzen. Der Adapterbolzen ist vorzugsweise ein sich in Axialrichtung erstreckendes bolzenförmiges Element, das mit seinem einen Ende in das zweite Antriebselement eingesteckt wird und dessen zweites Ende in Axialrichtung vom Beschlag absteht und zur Montage des Betätigungshebels dient. Dieser wird beispielsweise auf den Adapterbolzen drehfest aufgesteckt, der hierzu an seinem zweiten Ende nach Art eines Mehrkants ausgebildet ist.

Als Mittel zur Fixierung der Drehposition zwischen der Welle, dem Antriebselement und dem Verstellelement ist gemäß einer bevorzugten Ausgestaltung eine formschlüssige Press- oder Einpressverbindung zwischen zumindest zwei dieser drei Bauteile vorgesehen. Die Festlegung der gewünschten Drehposition erfolgt daher in einfacher Weise durch einen Einpressvorgang, insbesondere ohne dass weitere Befestigungen erforderlich sind. Beim Einpressvorgang erfolgt hierbei eine gewünschte plastische Materialverformung, beispielsweise durch hervorstehende Verdrehsicherungselemente, wie Nasen, Zähne, etc. Durch die Einpressverbindung wird zugleich auch eine Axialsicherung durch Reibschluss erreicht. Bei der Montage wird derart vorgegangen, dass die einzelnen Teile zueinander in die gewünschte Drehposition gebracht werden, ohne dass sie bereits miteinander fest verbunden sind. Anschließend werden die Teile in Axialrichtung, also in Längsrichtung der Welle, ineinander getrieben und damit in der zuvor eingestellten gewünschten Drehposition zueinander drehfest verbunden. Gemäß einer zweckdienlichen Ausgestaltung ist hierbei vorgesehen, dass zumindest eines der Bauteile eine insbesondere umlaufende Rändelung oder Zahnung aufweist.

Die Mittel zur Fixierung umfassen eine Buchse, die formschlüssig in der Ausnehmung des zweiten Antriebselements einliegt. Die Buchse definiert hierbei insbesondere eine Montagehilfe für das Verstellelement und die

Welle, die mit dem zweiten Antriebselement jeweils mittelbar über die Buchse drehfest verbunden sind. Durch die Buchse ist insgesamt eine verbesserte Stabilität erreicht, da das Verstellelement und/oder die Welle in die Buchse eingesteckt sind. Dadurch ist auch eine erhöhte Sicherheit gegen so genannte Missbrauchskräfte gegeben, wenn beispielsweise ein Nutzer den Betätigungshebel als Trittstufe missbraucht. Zur Ausbildung des Formschlusses der Buchse mit der Ausnehmung des Antriebselements weist die Buchse endseitig eine komplementär zu der Ausnehmung gestaltete Außenkontur, insbesondere Mehrkantkontur, auf.

Zweckdienlicherweise ist die Buchse in die Ausnehmung eingepresst, d.h. die Buchse liegt spielfrei in der Ausnehmung ein, so dass sie auch in axialer Richtung fixiert ist. Bei der Montage wird derart vorgegangen, dass zunächst die Buchse in die Ausnehmung eingepresst wird, anschließend die Welle und das Verstellelement in ihre SollDrehposition gebracht und schließlich mit der Buchse drehfest verbunden werden. Hierzu können die Welle und/oder das Verstellelement durch Einpressen mit der Buchse verbunden werden.

Alternativ oder ergänzend zum Einpressen ist in einer bevorzugten Variante zur Fixierung der Drehposition eine stoffschlüssige Verbindung, insbesondere eine Schweißverbindung, vorgesehen. Über die Schweißverbindung kann sowohl eine Drehsicherung als auch eine Axialsicherung erzielt werden. Je nach Ausgestaltung kann hierbei die Buchse mit dem Antriebselement, die Buchse mit dem Verstellelement, die Buchse mit der Welle, die Welle mit dem Verstellelement oder auch in einer gemeinsamen Schweißverbindung die Buchse mit der Welle und dem Verstellelement verbunden werden. Prinzipiell besteht auch die Möglichkeit, das Verstellelement und/oder die Welle direkt mit dem Antriebselement zu verschweißen. Die Schweißverbindung erfolgt vorzugsweise ausschließlich auf der gut zugänglichen Türseite und zwar über die Buchse an deren Außenseite.

In zweckdienlicher Ausgestaltung weist die Buchse außenseitig bevorzugt in mehreren Teilbereichen Materialverjüngungen auf, so dass Schweißtaschen gebildet sind. Diese Schweißtaschen definieren gewünschte Schweißpositionen und gewährleisten ein sicheres Verschweißen. Die Schweißtaschen verlaufen vorzugsweise in Axialrichtung und sind um die Mantelseite der Hülse gleichmäßig verteilt angeordnet. Ergänzend oder alternativ kann auch eine umlaufende Schweißverbindung vorgesehen sein.

Alternativ zu der Ausgestaltung mit der eingepressten Buchse liegt diese mit Spiel und damit in Axialrichtung lose in der Ausnehmung ein derart, dass eventuell auftretende Axialkräfte nicht auf die Antriebselement übertragen werden.

Gemäß einer bevorzugten Ausgestaltung weist die Buchse und vorzugsweise auch die Welle jeweils einen Außenanschlag auf, über den die Axialposition bezüglich des zweiten Beschlags festgelegt ist. Mit diesem Außenanschlag, der beispielsweise als umlaufender Ringbund ausgebildet ist, stützt sich sowohl die Welle als auch die Buchse jeweils an einem Beschlagteil des türseitigen Beschlags ab.

Um eine hohe mechanische Widerstandskraft insbesondere gegen Missbrauchskräfte zu erreichen, sind die Bauteile Welle, Verstellelement und Buchse nach Art einer Rohrin-Rohr-Kombination ineinander gesteckt. Insbesondere ist hierbei vorgesehen, dass beispielsweise im Bereich einer Schweißnaht alle drei Elemente ineinander gesteckt sind.

Zweckdienlicherweise ist hierbei vorgesehen, dass das Verstellelement zwei Zapfen mit unterschiedlichem Durchmesser aufweist, die sich endseitig in Axialrichtung aneinander anschließen. Der vordere Zapfen mit geringerem Durchmesser ist hierbei in die als Hohlwelle ausgebildete Welle eingesteckt. Der Außendurchmesser dieses vorderen Zapfens ist dem Innendurchmesser der Hohlwelle angepasst, so dass allenfalls ein Einführspiel gegeben ist. Der hintere Zapfen ist demgegenüber mit einem größeren Durchmesser ausgebildet, welcher an den Innendurchmesser der Buchse allenfalls mit einem Einführspiel angepasst ist. Hierdurch wird eine besonders stabile Verbindung erzielt. Zugleich definiert der hintere Zapfen einen Anschlag für die Welle. Bevorzugt weist das Verstellelement einen zusätzlichen insbesondere als Ringbund ausgeführten Außenanschlag auf, mit dem sich das Verstellelement an dem stirnseitigen Ende der Buchse abstützt.

Alternativ zu dieser zweistufigen Zapfen-Ausgestaltung sind das Verstellelement und die Welle in die Buchse eingesteckt und fluchten quasi miteinander. Sowohl die Welle als auch der eingesteckte Zapfen des Verstellelements sind hierbei unmittelbar mit der Buchse vorzugsweise stoffschlüssig durch Schweißen verbunden.

Gemäß einer dritten Ausführungsvariante ist schließlich vorgesehen, dass das Verstellelement einen Langzapfen aufweist, der durch die gesamte Buchse hindurch gesteckt ist. An dessen Ende ist die Welle befestigt, die daher lediglich mittelbar über den Langzapfen mit der Buchse und dem Antriebselement verbunden ist. Die Befestigung der Welle auf dem Langzapfen kann entweder stoffschlüssig oder durch ein Aufpressen erfolgen.

Die Aufgabe wird zudem durch eine Beschlaganordnung mit den Merkmalen des Anspruchs 8 gelöst.

Demnach umfasst eine Beschlaganordnung für einen Sitz, insbesondere für einen Fahrzeugsitz,
- einen ersten Beschlag, der ein erstes Antriebselement aufweist,
- einen zweiten Beschlag, der ein zweites Antriebselement aufweist,
- eine den ersten und den zweiten Beschlag verbindende, sich entlang einer Drehachse erstreckende Welle, die ein formschlüssig mit dem ersten Antriebselement verbundenes erstes Ende und ein mit dem zweiten Antriebselement verbundenes zweites Ende aufweist,
- ein Verstellelement zur Betätigung der Beschläge und
- eine Buchse, die das zweite Ende der Welle, das zweite Antriebselement und das Verstellelement drehfest miteinander verbindet und dazu eine stoffschlüssige Verbindung aufweist.

Diesem liegt der Gedanke zugrunde, die Verbindung der die Beschläge miteinander verbindenden Welle mit dem Antriebselement des zweiten Beschlags und dem Verstellelement über eine Buchse herzustellen, die beispielsweise formschlüssig in eine Ausnehmung des zweiten Antriebselementes eingesteckt sein kann und an der mindestens eine stoffschlüssige Verbindung beispielsweise in Form einer Schweißverbindung angeordnet ist, über die eine Fixierung der Verbindung der Welle und des Verstellelementes mit dem zweiten Antriebselement erfolgt: Die Buchse dient insbesondere als eine Montagehilfe für das Verstellelement und die Welle, die mit dem zweiten Antriebselement jeweils mittelbar über die Buchse drehfest verbunden sind. Mittels der Buchse kann insgesamt eine verbesserte Stabilität und eine erhöhte Sicherheit gegen so genannte Missbrauchskräfte erreicht werden, wenn beispielsweise ein Nutzer den Betätigungshebel als Trittstufe missbraucht.

Die stoffschlüssige Verbindung kann zwischen der Buchse und der Welle und alternativ oder zusätzlich zwischen der Buchse und dem Verstellelement hergestellt werden. Dabei kann eine gemeinsame Schweißnaht zwischen Welle, Verstellelement und Buchse zur Herstellung der stoffschlüssigen Verbindung und zur drehfesten Fixierung der Welle und des Verstellelementes mit der Buchse eingesetzt werden. Ebenso denkbar ist aber auch, zwei getrennte Schweißnähte einerseits zur Verbindung der Buchse mit der Welle und andererseits zur Verbindung der Buchse mit dem Verstellelement zu verwenden. Zusätzlich können auch ein oder mehrere in axialer Richtung zur Welle verlaufende Schweißnähte an der Buchse vorgesehen werden.

Eine zusätzliche Schweißnaht kann gegebenenfalls auch zwischen der Buchse und dem zweiten Antriebselement vorgesehen sein, um die Buchse drehfest mit dem zweiten Antriebselement zu verbinden. Alternativ wird die Buchse zur Verbindung mit dem zweiten Antriebselement formschlüssig in eine Ausnehmung des zweiten Antriebselements eingesteckt, insbesondere eingepresst. Zur Ausbildung des Formschlusses der Buchse mit der Ausnehmung des Antriebselements weist die Buchse dabei endseitig eine komplementär zu der Ausnehmung gestaltete Außenkontur, insbesondere Mehrkantkontur, auf. Durch das Einpressen der Buchse in die Ausnehmung liegt die Buchse spielfrei in der Ausnehmung ein und ist auch in axialer Richtung relativ zum zweiten Antriebselement fixiert.

Nach dem Einpressen werden das zweite Ende der Welle und das Verstellelement in eine Bohrung der Buchse eingesteckt, und die stoffschlüssige Verbindung wird zur drehfesten Fixierung der Buchse mit der Welle und dem Verstellelement hergestellt. Bei der Montage wird dabei derart vorgegangen, dass zunächst die Buchse in die Ausnehmung eingepresst wird, anschließend die Welle und das Verstellelement in ihre Soll-Drehposition gebracht und schließlich mit der Buchse drehfest verbunden werden.

Bei einer als Schweißverbindung ausgebildeten stoffschlüssigen Verbindung ist eine Schweißnaht bevorzugt quer zur Drehachse der Welle an der Buchse angeordnet. Die Schweißnaht erstreckt sich somit in Umfangsrichtung um die Buchse, wobei die Schweißnaht beispielsweise umfänglich an einer Mantelfläche eines zylindrischen Abschnitts der Buchse angeordnet sein kann.

Durch das Vorsehen der umfänglichen, quer zur Drehachse der Welle gerichteten Schweißnaht kann die Herstellung der stoffschlüssigen Verbindung durch ein Schweißwerkzeug, beispielsweise ein Laserschweißgerät, vereinfacht werden. Insbesondere kann auf Schweißtaschen zur Herstellung der Schweißverbindung verzichtet werden, wodurch sich die Herstellung der Buchse vereinfacht und eine Schwächung der Buchse durch eine zur Bildung der Schweißtaschen bedingte Materialverdünnung der Buchse vermieden werden kann. Zudem kann die quer gerichtete Schweißnaht in beliebiger Winkelposition umfänglich an der Buchse angeordnet werden, so dass eine präzise Ausrichtung der Buchse zu dem Schweißwerkzeug nicht erforderlich ist.

Eine quer zur Drehachse gerichtete Schweißnaht zur Herstellung der stoffschlüssigen Verbindung kann darüber hinaus so angeordnet werden, dass sie für ein Schweißwerkzeug, insbesondere ein Laserschweißgerät leicht zugänglich ist, wobei das Schweißwerkzeug zur Herstellung der Schweißnaht quer zur Drehachse der Welle ausschließlich linear verfahren werden kann, nicht aber in axialer Richtung verfahren werden muss.

Bevorzugt ist die Schweißnaht in Umfangsrichtung an einer Mantelfläche eines zylindrischen Abschnitts der Buchse angeordnet und beschreibt dabei einen Umfangswinkel zwischen 100° und 200°, insbesondere 130° bis 170°. Die Schweißnaht umgibt die Buchse somit nicht vollumfänglich, sondern überstreicht lediglich einen umfänglichen Teilabschnitt der Buchse.

Die Schweißverbindung erfolgt vorzugsweise ausschließlich auf der gut zugänglichen Türseite und zwar über die Buchse an deren Außenseite.

Anstelle einer quer gerichteten Schweißnaht können alternativ selbstverständlich auch eine oder mehrere Schweißnähte in Axialrichtung an der Buchse vorgesehen sein, wobei zum Definieren der Schweißpositionen Schweißtaschen vorgesehen sein können.

Denkbar ist auch eine Anbringung einer oder mehrerer schräg gerichteter Schweißnähte oder einer nach Art einer Zickzackform ihre Richtung ändernden Schweißnaht an der Buchse.

Am ersten Ende der sich entlang einer Drehachse erstreckenden Welle kann vorteilhafterweise zur Herstellung einer formschlüssigen Wirkverbindung mindestens ein radial zur Drehachse von einem ersten Umfang der Welle vorspringender Vorsprung ausgebildet sein, der zwei Flanken aufweist, die zumindest abschnittsweise parallel zueinander verlaufen und die mit dem Antriebselement in Wirkverbindung stehen. Mit einer solchen Ausbildung des mindestens einen Vorsprungs soll eine möglichst vorteilhafte Kraftübertragung von der Welle auf das Antriebselement des Rastbeschlags erreicht werden. In Abkehr von der herkömmlichen keilförmigen Ausbildung von Vorsprüngen einer Welle werden hierbei die Vorsprünge mit zwei Flanken versehen, die zumindest abschnittsweise parallel zueinander verlaufen und zur Kraftübertragung mit dem Antriebselement, also der Ausnehmung des Antriebselements, in Wirkverbindung stehen. Durch die parallele Ausbildung der Flanken wird die Verkeilwirkung der Welle in der Ausnehmung des Antriebselements bei Übertragung eines Drehmoments reduziert. Die Kraftübertragung erfolgt im Wesentlichen in Umfangsrichtung.

Die Ausbildung des mindestens einen Vorsprungs mit zwei parallelen Flanken stellt einen Kompromiss zwischen einer möglichst optimalen Kraftübertragung und einer einfachen Herstellbarkeit der Welle dar. Um die Übertragung eines reinen Drehmoments zu erreichen, müssten die Flanken der Vorsprünge an sich radial, also senkrecht zum Umfang der Welle gerichtet sein. Eine derartige Ausbildung der Vorsprünge würde jedoch die Herstellbarkeit der Welle erschweren. Durch die Ausbildung des mindestens einen Vorsprungs mit zwei parallelen Flanken wird die Welle durch Einführen eines Formprofils in eine sich längs entlang der Welle erstreckende Bohrung auf einfache Weise herstellbar und gleichzeitig eine vorteilhafte Kraftübertragung mit einer vornehmlichen Übertragung eines Drehmoments erreicht.

Vorteilhafterweise steht die Welle im Bereich eines ersten Endes mit dem Antriebselement des ersten Rastbeschlags in Wirkverbindung. Im Bereich eines zweiten Endes kann die Welle dann mit einem zweiten Rastbeschlag verbunden sein, der an einer der ersten Seite gegenüberliegenden zweiten Seite des Fahrzeugsitzes zu montieren ist, wobei der erste Rastbeschlag und der zweite Rastbeschlag jeweils ein beispielsweise als Nockenscheibe ausgebildetes Antriebselement zur Betätigung aufweisen und die Welle an dem zweiten Ende mit dem Antriebselement des zweiten Rastbeschlags verbunden ist. Die Welle dient somit zur Betätigung zweiter Rastbeschläge beispielsweise zum Öffnen zur Verrastung und Arretierung einer Rückenlehne eines Fahrzeugsitzes in einer bestimmten Neigungsstellung, wobei durch die beidseitige Anordnung der Rastbeschläge an zwei Seiten des Fahrzeugsitzes eine beidseitige Verrastung erreicht wird. Zur Betätigung werden die Rastbeschläge gelöst, so dass die Rückenlehne verstellt und in eine neue, verschwenkte Neigungsstellung gebracht werden kann. Der erste und der zweite Rastbeschlag können hierbei identisch, insbesondere mit baugleichen Antriebselementen in Form von Nockenscheiben ausgebildet sein, so dass gleiche Bauteile für beide Rastbeschläge verwendet werden können und somit die Herstellbarkeit der Beschlaganordnung vereinfacht ist.

In einer vorteilhaften Ausgestaltung kann die Welle drei radial von dem ersten Umfang der Welle nach außen vorstehende Vorsprünge aufweisen, die eine Mitnehmerkontur ausbilden. Diese Vorsprünge sind beispielsweise durch Kaltverformung der als Rohr ausgebildeten Welle hergestellt, bei der ein Formprofilstück in eine sich längs der Welle erstreckende Bohrung eingeführt und durch Aufbringen einer Presskraft auf das Formprofilstück das Profil der Welle aufgeprägt und so die Vorsprünge hergestellt werden. Der erste Umfang entspricht hierbei dem eigentlichen Umfang der beispielsweise als Stahlrohr ausgebildeten Welle. Dadurch, dass die Vorsprünge nach außen von diesem Umfang abstehen und nicht nach innen in den Umfang eingeformt sind, erfolgt die Kraftübertragung von der Welle auf das Antriebselement bei größerem Radius, so dass eine vorteilhafte Hebelwirkung mit entsprechend geringerer Beanspruchung der Welle und ihrer Vorsprünge und vorteilhafter Kraftübertragung erreicht wird.

Bei einer Drehbewegung der Welle in eine erste Richtung um die Drehachse erfolgt eine Kraftübertragung von der Welle auf das Antriebselement insbesondere im Wesentlichen über eine der Flanken und bei umgekehrter Drehbewegung in die andere Richtung insbesondere über die andere der Flanken. Jede Flanke des mindestens einen Vorsprungs wird somit bei Kraftübertragung in eine Richtung beansprucht, wobei die eine der Flanken der einen Drehbewegung und die andere der Flanken der anderen Drehbewegung zugeordnet ist. Die Welle kann dabei derart mit der Ausnehmung des Antriebselements in Wirkverbindung stehen, dass ein Drehmoment in Umfangsrichtung der Welle vornehmlich ausschließlich über die Flanken auf das Antriebselement übertragen wird. Die Wirkverbindung in Umfangsrichtung zur Übertragung eines Drehmoments um die Drehachse wird somit im Wesentlichen ausschließlich über die Flanken hergestellt. Zur Übertragung eines Drehmoments treten lediglich die Flanken mit der Ausnehmung des Antriebselements in Wirkverbindung und übertragen das Drehmoment von der Welle auf das Antriebselement.

Zur vorteilhaften Kraftübertragung in Umfangsrichtung stehen somit bevorzugt lediglich die Flanken des mindestens einen Vorsprungs mit der Ausnehmung in Wirkverbindung. Gleichzeitig kann die Welle mit Abschnitten des ersten Umfangs, die Kreissegmenten eines Kreises mit einem inneren Radius um die Drehachse der Welle entsprechen, mit der Ausnehmung des Antriebselements in radialer Wirkverbindung stehen. Gedanke hierbei ist, die Wirkverbindung zwischen der Ausnehmung und der Welle in Umfangsrichtung über die Flanken des mindestens einen Vorsprungs herzustellen, die radiale Wirkverbindung jedoch über andere, von den Flanken des Vorsprungs unterschiedliche Abschnitte des Umfangs zu erreichen. Die radiale Wirkverbindung dient dabei der radialen Arretierung der Welle in der Ausnehmung des Antriebselements und zur Zentrierung der Welle in der Ausnehmung. Diese Zentrierung erfolgt über die von den Flanken des mindestens einen Vorsprungs unterschiedlichen Abschnitte des ersten Umfangs, die mit entsprechenden Abschnitten der Ausnehmung des Antriebselements radial in Kontakt stehen. Radial zur Drehachse der Welle gerichtete Kräfte werden dann im Wesentlichen über die Abschnitte des ersten Umfanges von der Welle auf das Antriebselement übertragen.

Zur Montage der Welle mit den zwei Rastbeschlägen wird die Welle zunächst durch die Ausnehmung des Antriebselements des ersten Rastbeschlags geführt, durch die Ausnehmung geschoben und in die Ausnehmung des Antriebselements des zweiten Rastbeschlags eingeführt. Die Welle kann dabei an einem ersten Ende zur Verbindung mit dem Antriebselement des ersten Rastbeschlags radial von dem ersten Umfang der Welle nach außen vorstehende Vorsprünge aufweisen, während die Welle im Bereich des anderen, zweiten Endes im Vergleich zu dem ersten Umfang der Welle verjüngt ist. Die Welle wird so durch die Ausnehmungen der Antriebselemente des ersten und des zweiten Rastbeschlags geschoben, bis die Vorsprünge der Welle mit der Ausnehmung des Antriebselements des ersten Rastbeschlags in Wirkverbindung treten und das zweite, verjüngte Ende der Welle in die Ausnehmung des Antriebselements des zweiten Rastbeschlags eingreift. Die Verbindung der Welle mit dem Antriebselement im Bereich des zweiten Endes erfolgt dann beispielsweise über einen Adapterbolzen, der die Anbindung der Welle an ein Betätigungselement zur Betätigung der Beschlaganordnung herstellt.

In einer vorteilhaften Ausgestaltung weist die Welle in Richtung der Drehachse versetzt angeordnete Einführschrägen zum Einführen der Welle in die Ausnehmungen der Antriebselemente auf. Die Einführschrägen sind bevorzugt aufeinander abgestimmt, indem die Einführschrägen entlang der Drehachse der Welle einen anderen Abstand zueinander aufweisen als der erste Rastbeschlag von dem zweiten mit der Welle zu verbindenden Rastbeschlag.

Die Einführschrägen dienen insbesondere dazu, das Einführen der Welle in die Ausnehmungen der Rastbeschläge zu vereinfachen und beim Einführen Fertigungstoleranzen in der Passgenauigkeit der Welle in den Ausnehmungen der Antriebselemente der Rastbeschläge auszugleichen. Jedem Antriebselement ist eine Einführschräge der Welle zugeordnet. Beim Einführen der Welle in die Ausnehmungen tritt so die Welle über ihre Einführschrägen mit den Ausnehmungen der Antriebselemente in Kontakt, und die Welle wird insbesondere im Bereich des zweiten Endes, das dem die Vorsprünge aufweisenden ersten Ende der Welle abgewandt ist, in der Ausnehmung des zweiten Rastbeschlags zentriert, indem die Ausnehmung auf die zugeordnete Einführschräge ganz oder teilweise aufläuft.

Durch die Anordnung der Einführschrägen an der Welle mit einem vom Abstand der Rastbeschläge unterschiedlichen Abstand entlang der Drehachse der Welle wird sichergestellt, dass die Einführschrägen nicht gleichzeitig, sondern nacheinander mit den Ausnehmungen der Antriebselemente der Rastbeschläge in Kontakt treten und die zum Einführen der Welle erforderliche Montagekraft verringert wird

Die Aufgabe wird gemäß der Erfindung weiterhin gelöst durch ein Verfahren zur Montage einer Beschlaganordnung gemäß Anspruch 13.

Die im Hinblick auf die Beschlaganordnung angeführten Vorteile und bevorzugten Ausgestaltungen sind sinngemäß auch auf das Verfahren zu übertragen. Um eine definierte Synchronisation zwischen den beiden Beschlägen zu gewährleisten, befinden sich die Beschläge zu Beginn der Montage bevorzugt in einer definierten Schließstellung. In dieser sind die Antriebselemente in einer definierten Drehposition, in der die Riegelelemente sich in der Sperrstellung, beispielsweise in ihrer radial äußeren Position befinden, so dass eine Drehbewegung der beiden Beschlagteile zueinander unterbunden ist. Die Rastbeschläge werden also in dieser Schließstellung vormontiert geliefert und am Sitz angebracht.

Zur Herstellung der Wirkverbindung der Welle im Bereich eines ersten Endes der Welle kann vorteilhafterweise mindestens ein radial zur Drehachse von einem ersten Umfang der Welle vorspringender Vorsprung zum Eingriff in eine Ausnehmung des Antriebselements des ersten Rastbeschlags vorgesehen sein. Der mindestens eine Vorsprung weist zwei Flanken auf, die zumindest abschnittsweise parallel zueinander verlaufen, wobei zur Montage die Welle derart in die Ausnehmung des Antriebselements des ersten Rastbeschlags eingeschoben wird, dass die Flanken mit der Ausnehmung des Antriebselements in Wirkverbindung treten.

Vorteilhafterweise wird die Welle mit einem zweiten, im Vergleich zum ersten Ende im Durchmesser verjüngten Ende in eine Ausnehmung des Antriebselements des zweiten Rastbeschlags eingeschoben. Die Montage der Welle erfolgt damit dadurch, dass die Welle zunächst durch die Ausnehmung im Antriebselement des ersten Rastbeschlags geschoben wird und nachfolgend in die Ausnehmung des Antriebselements des zweiten Rastbeschlags eingeführt wird, bis die Vorsprünge am ersten Ende der Welle mit der Ausnehmung des Antriebselements des ersten Rastbeschlags in Wirkverbindung treten. Zum erleichterten Einführen der Welle können hierbei entlang der Drehachse versetzte Einführschrägen an der Welle vorgesehen sein, die das Einführen der Welle durch die Ausnehmungen der Antriebselemente des ersten und des zweiten Rastbeschlags vereinfachen.

Vorteilhafterweise kann die Welle in einer Zwischenmontageposition in Richtung der Drehachse relativ zum ersten Rastbeschlag verschiebbar und um die Drehachse relativ zum zweiten Rastbeschlag verdrehbar sein. In der Zwischenmontageposition ist die Welle somit durch die Ausnehmungen der Antriebselemente des ersten und des zweiten Rastbeschlags eingeschoben, jedoch relativ zu den Ausnehmungen der Antriebselemente noch nicht endgültig fixiert. So kann in der Zwischenmontageposition die Welle immer noch relativ zur Ausnehmung des Antriebselements des ersten Rastbeschlags verschoben und relativ zur Ausnehmung des Antriebselements des zweiten Rastbeschlags verdreht werden. Auf diese Weise ist möglich, die Verdrehstellung der Welle zum zweiten Rastbeschlag anzupassen und so einzustellen, dass die Welle in derselben Verdrehposition zum Antriebselement des ersten Rastbeschlags und zum Antriebselement des zweiten Rastbeschlags positioniert ist, wie dies für eine synchrone Betätigung der Rastschläge erforderlich ist.

In einer Endmontageposition kann die Welle dann stoffschlüssig oder formschlüssig mit dem Antriebselement des zweiten Rastbeschlags verbunden werden, so dass in der Endmontageposition die Welle drehfest und fest in axialer Richtung mit ,dem Antriebselement des zweiten Rastbeschlags verbunden ist. Durch den Eingriff der Vorsprünge in die Ausnehmung des Antriebselements des ersten Rastbeschlags wird dabei mit dem Antriebselement des ersten Rastbeschlags lediglich eine Festlegung in der Ebene senkrecht zur Drehachse hergestellt. Eine axiale Sicherung der Welle relativ zum Antriebselement des ersten Rastbeschlags erfolgt vorteilhafterweise nicht, um eine Überbestimmung zu vermeiden. Im Betrieb der Beschlaganordnung ist so eine Verschiebung der Welle relativ zum Antriebselement des ersten Rastbeschlags möglich, so dass Toleranzen ausgeglichen werden können.

Zur Montage wird die Welle in die Ausnehmungen der Antriebselemente des ersten und des zweiten Rastbeschlags eingeführt. Eine Zentrierung der Welle in der Ausnehmung des Antriebselements des ersten Rastbeschlags erfolgt bei der Montage dabei vorteilhafterweise über Abschnitte des ersten Umfangs der Welle, die Kreissegmenten eines Kreises mit einem inneren Radius um die Drehachse der Welle entsprechen und mit der Ausnehmung des Antriebselements des ersten Rastbeschlags in radiale Wirkverbindung gebracht werden. Durch die radiale Wirkverbindung erfolgt eine Zentrierung der Welle relativ zum Antriebselement des ersten Rastbeschlags, wobei die Zentrierung bevorzugt lediglich über diese Abschnitte erfolgt, nicht jedoch über die an der Welle vorgesehenen Vorsprünge. Dadurch wird eine Überbestimmung bei der Zentrierung vermieden.

Die Welle kann zwei Einführschrägen aufweisen, die jeweils einem der Antriebselemente des ersten und des zweiten Rastbeschlags zugeordnet sind und entlang der Drehachse der Welle derart zueinander beabstandet sind, dass bei der Herstellung der Verbindung der Welle mit dem ersten und dem zweiten Rastbeschlag zunächst die eine der Einführschrägen mit dem Antriebselement des einen der beiden Rastbeschläge und anschließend die andere der Einführschrägen mit dem Antriebselement des anderen der beiden Rastbeschläge in Kontakt tritt. Die Einführschrägen sind somit derart aufeinander abgestimmt, dass der Abstand zwischen den Einführschrägen entlang der Drehachse der Welle sich von dem Abstand der beiden Rastbeschläge zueinander unterscheidet, so dass die Einführschrägen nacheinander mit den Antriebselementen der Rastbeschläge in Kontakt treten. Auf diese Weise kann die zum Einführen der Welle erforderliche Montagekraft gering gehalten werden.

Der mindestens eine Vorsprung an dem ersten Ende der Welle wird vorteilhafterweise mittels Kaltverformung durch Einschieben eines Formprofils in eine sich entlang der Drehachse der Welle erstreckende Bohrung hergestellt. Die Formgebung der Welle mit dem mindestens einen Vorsprung, der zwei parallele Flanken aufweist, stellt einen Kompromiss dar, der zum einen eine vorteilhafte Kraftübertragung von der Welle auf das Antriebselement ermöglicht, zum anderen eine einfache Herstellung mittels Kaltverformung unter Verwendung eines Formprofils erlaubt. Zur Herstellung wird das Formprofilstück in die Bohrung unter Aufbringung einer in Richtung der Drehachse gerichteten Presskraft eingesteckt und somit das Profil des Formprofilstücks auf die Welle aufgeprägt.

Ausführungsbeispiele der Erfindung werden im Folgenden anhand der Figuren näher erläutert. Es zeigen jeweils in schematischen Darstellungen:
- Fig. 1: eine teilweise geschnittene, perspektivische Darstellung eines türseitigen, zweiten Rastbeschlags;
- Fig. 2: in einer perspektivischen Explosionsdarstellung ein als Nockenscheibe ausgebildetes Antriebselement und eine Buchse zum Einstecken in die Nockenscheibe im türseitigen Rastbeschlag;
- Fig. 3: eine perspektivische Darstellung einer Nockenscheibe mit eingesteckter Welle für die tunnelseitige Anordnung;
- Fig. 4: eine Darstellung ähnlich wie Fig. 3 mit einer als Stranggussprofil ausgebildeten Welle;
- Fig. 5A-C: teilweise geschnittene Darstellungen des Rastbeschlags gemäß Fig. 1 zu verschiedenen Montageschritten;
- Fig. 6: eine teilweise geschnittene Darstellung des türseitigen Rastbeschlags gemäß einer zweiten Ausführungsvariante;
- Fig. 7A-C: teilweise geschnittene Darstellungen des türseitigen Rastbeschlags einer dritten Ausführungsvariante in einer ersten Alternative zu verschiedenen Montageschritten;
- Fig. 8A, B: perspektivische ausschnittsweise Darstellungen der Bauteile Welle, Nockenscheibe, Buchse und Verstellelement der dritten Ausführungsvariante mit unterschiedlich angeordneten Schweißnähten;
- Fig. 9: eine teilweise geschnittene perspektivische Darstellung des türseitigen Rastbeschlags gemäß der dritten Ausführungsvariante in einer zweiten Alternative, bei der die Teile Welle, Buchse und Verstellelement über eine Einpressverbindung drehfest miteinander verbunden sind;
- Fig. 10A, B: jeweils eine perspektivische Darstellung einer Welle (Fig. 10B) sowie einer Nockenscheibe mit eingesteckter Welle (Fig. 10A);
- Fig. 11: eine perspektivische Darstellung einer Ausführungsform einer Buchse an einem Ende einer Welle;
- Fig. 12A, B: Darstellungen der Buchse gemäß Fig. 11 schräg von oben;
- Fig. 13A: eine perspektivische Teilschnittansicht einer Beschlaganordnung;
- Fig. 13B: eine schematische Ansicht einer Beschlaganordnung an einem Fahrzeugsitz;
- Fig. 14A: eine Explosionsdarstellung eines Rastbeschlags einer Beschlaganordnung;
- Fig. 14B: eine Ansicht von Teilen des Rastbeschlags gemäß Fig. 2a;
- Fig. 15: eine perspektivische Ansicht eines Endes einer Welle mit Vorsprüngen;
- Fig. 16: eine Teilschnittansicht des Endes der Welle gemäß Fig. 6 in einer Ausnehmung eines Antriebselements;
- Fig. 17: eine Teilschnittansicht einer Ausführungsform einer Welle und
- Fig. 18: eine Teilschnittansicht einer weiteren Ausführungsform einer Welle.

In den Figuren sind gleichwirkende Teile, soweit zweckdienlich, mit den gleichen Bezugszeichen bezeichnet.

Die in den Figuren gezeigten Rastbeschläge 2 weisen jeweils ein erstes Beschlagteil 4A sowie ein zweites Beschlagteil 4B auf. Diese sind jeweils in etwa scheibenförmig ausgebildet. Zwischen ihnen ist ein Zwischenraum gebildet, in dem eine Beschlagsmechanik angeordnet ist. Diese umfasst insbesondere ein als Nockenscheibe 6A, B ausgebildetes Antriebselement. Das Bezugszeichen 6A bezeichnet hierbei die tunnelseitigen Nockenscheibe (erstes Antriebselement) und das Bezugszeichen 6B die türseitige Nockenscheibe (zweites Antriebselement). Die Nockenscheiben 6A, B sind im Ausführungsbeispiel identisch ausgebildet.

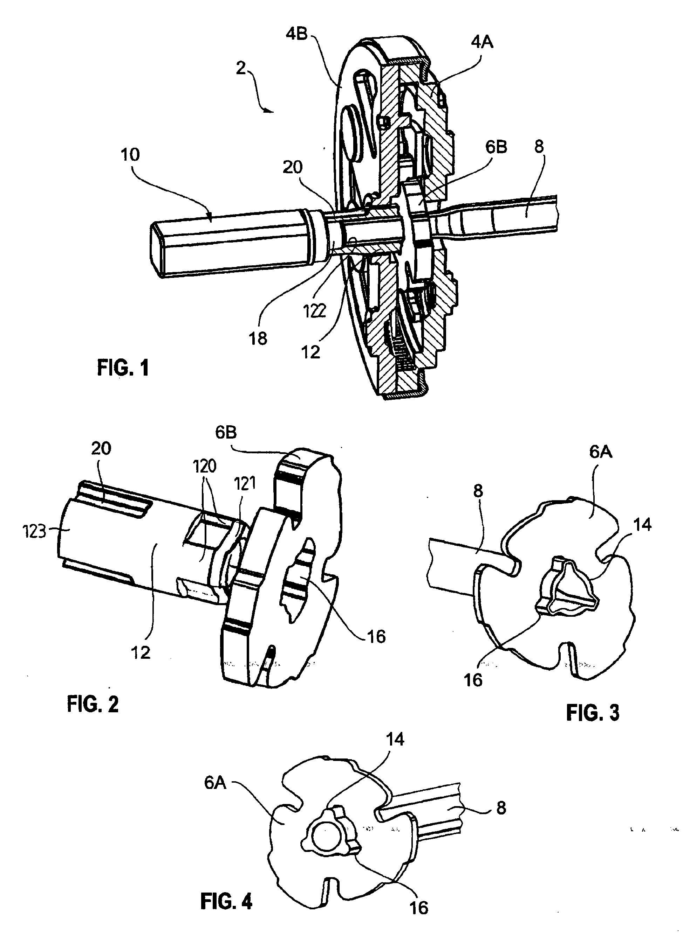

Über die Nockenscheiben 6A, B und deren exzentrisch angeordnete Nocken, im Ausführungsbeispiel drei Nocken, wird ein an einem der beiden Beschlagteile 4A, B radial verschieblich gelagertes Riegelelement betätigt, also in radialer Richtung nach außen geschoben bzw. wieder zurückgezogen. Über die Riegelelemente erfolgt eine Verriegelung zwischen den beiden Beschlagteilen 4A, B derart, dass sie gegeneinander nicht verdreht werden können. So ist beispielsweise an dem in der Fig. 1 zu erkennenden ersten Beschlagteil 4A an einem umlaufenden Rand eine Innenverzahnung ausgebildet, in die die Riegelelemente mit einer entsprechenden Außenverzahnung in der Schließstellung eingreifen. Die Riegelelemente sind hierbei nach Art von plattenförmigen Elementen ausgebildet, an deren Stirnseite die Verzahnung ausgebildet ist.

Die Nockenscheiben 6A, B werden mit Hilfe einer Verstellmechanik gedreht. Diese Verstellmechanik umfasst eine als Hohlwelle ausgebildete Welle 8, ein als Adapterbolzen 10 ausgebildetes Verstellelement sowie in den beschriebenen Ausführungsbeispielen eine Buchse 12. In der Endmontageposition sind die drei Bauteile Welle 8, Adapterbolzen 10 sowie Buchse 12 aneinander und mit der türseitigen Nockenscheibe 6B drehfest verbunden.

Der Adapterbolzen 10 dient zur Befestigung eines Betätigungshebels (nicht dargestellt), über den eine manuelle Betätigung der Beschlaganordnung erfolgt. Durch Betätigen dieses Hebels wird der Adapterbolzen 10, mit ihm die Welle 8 und damit die beiden Nockenscheiben 6A, B verdreht, so dass die beiden Rastbeschläge synchron aus ihrer Schließstellung in eine Freigabeposition überführt werden, so dass eine Neigungsverstellung der Sitzlehne ermöglicht ist.

Der in der Fig. 1 dargestellte türseitige Rastbeschlag 200 wird an der Türseite eines Sitzes, insbesondere Kraftfahrzeugsitzes, in hier nicht näher dargestellter Weise befestigt. An der gegenüberliegenden Seite, der Tunnelseite, wird ein weiterer Rastbeschlag (nicht dargestellt) befestigt. Die beiden Beschläge 2 sind über die Welle 8 miteinander verbunden und bilden eine gemeinsame Beschlaganordnung für den Kraftfahrzeugsitz. Der tunnelseitige Beschlag weist hierbei die gleichen Bauteile und den gleichen Aufbau auf wie der türseitige Rastbeschlag 200, mit der Ausnahme, dass die Buchse 12 und der Adapterbolzen 10 entfallen.

Dieses Gleichteileprinzip der beiden Rastbeschläge 2 ist von wesentlicher Bedeutung und ermöglicht die Verwendung von identischen Bauteilen unabhängig von der jeweiligen Einbaulage des jeweiligen Rastbeschlags 2 (Fahrersitz - Beifahrersitz; tunnelseitig - türseitig). Gleichzeitig ist durch den Adapterbolzen 10 eine kunden- oder modellspezifische Anpassung an einen gewünschten Betätigungshebel möglich, ohne dass das Gleichteileprinzip verlassen werden muss.

Bei der Montage wird derart vorgegangen, dass der Sitz mit den beiden Beschlägen 2 vormontiert wird. Erst anschließend wird die Welle 8 durch die beiden Beschläge 2 hindurchgeführt. Hierbei wird sie vorzugsweise von der Tunnelseite her durch den tunnelseitigen Beschlag 2 durchgeschoben und in den gegenüberliegenden türseitigen Beschlag 2B eingeschoben. Von besonderer Bedeutung ist, dass auf der Tunnelseite die Welle 8 drehfest mit dem tunnelseitigen Antriebselement 6A verbunden ist, gleichzeitig auf der Türseite jedoch zunächst noch keine spezielle Drehorientierung der Welle 8 bezüglich des türseitigen Antriebselements 6B festgelegt ist. Hierdurch ist gewährleistet, dass bei der Montage eines der Antriebselemente 6A,6B nicht aus seiner definierten Position, insbesondere aus der definierten Schließstellung, gedreht wird. Dies würde insgesamt zu einer asynchronen Verstellung der beiden Beschläge 2 führen, die aus komfortsowie sicherheitstechnischen Aspekten zu vermeiden ist. Aufgrund der zunächst freien Drehbarkeit der Welle 8 bezüglich der türseitigen Nockenscheiben 6B ist daher ohne weiteres eine unterschiedliche Drehorientierung der beiden Beschläge 2, beispielsweise aufgrund von Montagetoleranzen, ausgleichbar.

Bei der Montage wird bei allen Ausführungsbeispielen auf der Tunnelseite über einen Formschluss zwischen dem tunnelseitigen Ende der Welle 8 und der tunnelseitigen Nockenscheibe 6A zunächst eine Drehposition zwischen der Welle 8 und der tunnelseitigen Nockenscheibe 6A festgelegt, Diese Situation ist in der Fig. 3 dargestellt. Demgegenüber ist die Drehposition der Welle 8 bezüglich der türseitigen Nockenscheibe 6B zunächst offen. Für die formschlüssige Verbindung des tunnelseitigen Endes der Welle 8 weist dieses eine spezielle Außenkontur 14 auf. Mit ihrem tunnelseitigen Ende ist die Welle 8 in eine als Durchtrittsöffnung ausgebildete Ausnehmung 16 der Nockenscheibe 6A eingesteckt. Die Ausnehmung 16 weist eine zur Außenkontur 14 komplementäre Innenkontur auf. Die Außenkontur 14 sowie die Innenkontur der Ausnehmung 16 sind generell zur Ausbildung eines in Umfangsrichtung wirksamen Formschlusses durch Einstecken ausgebildet. Mit ihrem tunnelseitigen Ende lässt sich die Welle 8 mit leichtem Spiel in die Ausnehmung 16 einführen.

Im Ausführungsbeispiel der Fig. 2 bis 4 weist die Ausnehmung 16 eine in etwa kreisförmige Grundgeometrie mit radial nach außen gerichteten Taschen auf. Im Ausführungsbeispiel sind drei derartige um einen gleichen Winkelbetrag versetzte Taschen vorgesehen. Die Ausnehmung 16 ist generell daher nach Art einer beispielsweise bei Schrauben bekannten Mehrkant-Aufnahme zur Drehmomentübertragung ausgebildet.

Die Welle 8 ist als zylindrische Hohlwelle, beispielsweise Stahlwelle, ausgebildet und an ihrem tunnelseitigen Ende durch einen Umformvorgang aufgeweitet, um die Außenkontur 14 zu erzeugen (Fig. 3). Alternativ hierzu ist die Welle als Stranggussprofil ausgebildet. In diesem Fall ist die Welle 8 an ihrem türseitigen Ende durch einen Umformvorgang in eine im Wesentlichen zylindrische Form gebracht.

Im Ausführungsbeispiel der Fig. 1 ist das türseitige Ende der Welle 8 konisch verjüngt und in eine innere Bohrung 122 der Buchse 12 eingesteckt. Von der anderen Seite her ist der Adapterbolzen 10 mit einem endseitigen Zapfen 18 ebenfalls in die Bohrung 122 der Buchse 12 eingesteckt. Der Zapfen 18 und das verjüngte türseitige Ende der Welle 8 fluchten in etwa miteinander und liegen weitgehend an der Innenwandung der Buchse 12 an. Im Ausführungsbeispiel der Fig. 1 ist die Buchse 12 als eine Einpressbuchse mit radial nach außen vorspringenden Vorsprüngen 120 ausgebildet. Wie aus Fig. 2 hervorgeht, bilden die Vorsprünge 120 eine an die Ausnehmung 16 der Nockenscheibe 6B angepasste Außenkontur aus, über die die Buchse 12 in der Ausnehmung 16 drehfest einliegt. An ihrem stirnseitigen Ende verjüngt sich die Buchse 12 etwas und bildet so eine Einführschräge 121 aus, um das Einpressen zu ermöglichen. Aufgrund des Einpressens ist bereits eine axiale Sicherung der Buchse 12 in Beziehung zu der türseitigen Nockenscheibe 6B erzielt.

Wie weiter aus Fig. 2 hervorgeht, weist die Buchse 12 an ihrem von der Nockenscheibe 6B beabstandeten, durch einen zylindrischen Abschnitt 123 ausgebildeten Ende um ihren Umfang verteilt mehrere als Schweißtaschen 20 ausgebildete Vertiefungen auf, die durch eine jeweilige Materialverdünnung der Zylinderwand des zylindrischen Abschnitts 123 der Buchse 12 ausgebildet sind.

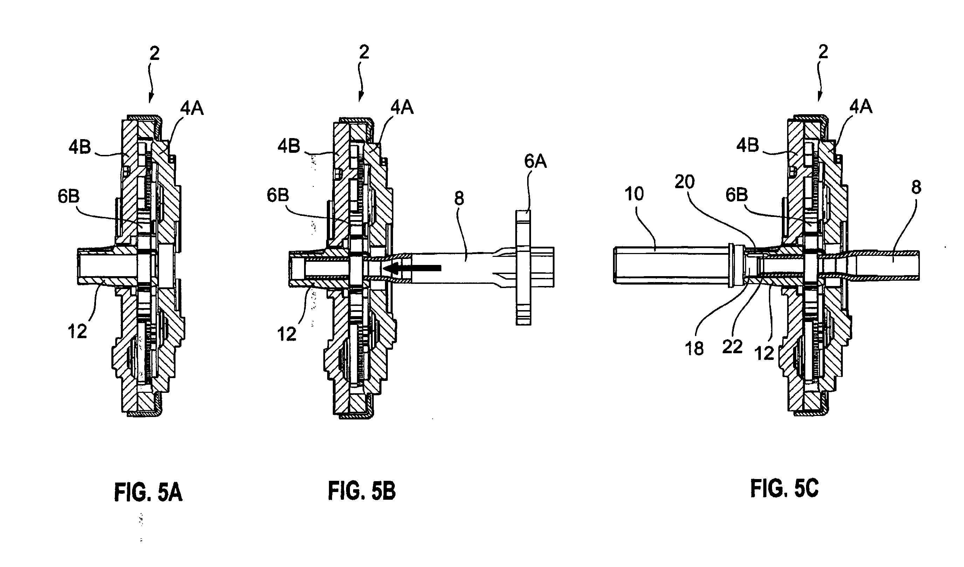

Der Montagevorgang wird anhand der Fig. 5A bis 5C deutlich: Zunächst wird die Buchse 12 in die Ausnehmung 16 der türseitigen Nockenscheibe 6B eingepresst. Die Welle 8 wird von der Tunnelseite eingeschoben, also mit ihrem zylindrischen Ende voraus zunächst durch die tunnelseitige Nockenscheibe 6A geführt. Auf der Tunnelseite wird das tunnelseitige Ende der Welle 8 mit ihrer Außenkontur formschlüssig in die tunnelseitige Nockenscheibe 6A eingesteckt (Fig. 5B). In der Fig. 5B ist von dem tunnelseitigen Rastbeschlag nur die tunnelseitige Nockenscheibe 6A dargestellt. Es versteht sich von selbst, dass der tunnelseitige Rastbeschlag bereits montiert ist und lediglich die Welle 8 durch die beiden Rastbeschläge 2 mit den Nockenscheiben 6A, B geführt wird. Aufgrund ihrer auf der Türseite zylindrischen Ausgestaltung der Welle 8 ist sie relativ zu der Buchse 12 beliebig verdrehbar. Dadurch wird ein Verdrehen des Antriebselements 6B aus seiner definierten Schließposition bei der Montage vermieden. Im anschließenden, in Fig. 5C dargestellten Montageschritt wird der Adapterbolzen 10 in die Buchse 12 eingesteckt.

In dieser Zwischenmontageposition ist die Drehposition des Adapterbolzens 10 sowie die der Welle 8 in Relation zu der Buchse 12 und damit der Nockenscheibe 6B prinzipiell frei. Dies ist zum einen für die Synchronisation der beiden Beschläge über die Welle 8 sowie für die gewünschte Drehstellung des später zu montierenden Betätigungshebels über den Adapterbolzen 10 von besonderer Bedeutung. Sind in dieser Zwischenmontageposition die einzelnen Bauteile in der gewünschten Drehlage orientiert, werden sie drehfest miteinander verbunden. Im Ausführungsbeispiel der Fig. 5C erfolgt dies über eine schematisch dargestellte Schweißverbindung. Die entsprechende Schweißnaht 22 ist in Fig. 5C beispielhaft dargestellt. Sie verläuft in Längsrichtung der Welle 8 im Bereich der Schweißtaschen 20. Wie aus Fig. 5C zu erkennen ist, überstreicht die Schweißnaht 22 den Zapfen 18 und ein Endstück der Welle 8, so dass mit nur einer Schweißnaht gleichzeitig sowohl die Welle 8 als auch der Adapterbolzen 10 mit der Buchse 12 stoffflüssig verbunden sind. Daneben können weitere Schweißpunkte oder auch Schweißnähte vorgesehen sein, beispielsweise wird der Adapterbolzen 10 über eine Umfangs-Schweißnaht ergänzend an der Buchse 12 angeschweißt. Von besonderem Vorteil ist hierbei generell, dass die Schweißnähte 22 an der Türseite und aufgrund der Buchse 12 etwas beabstandet vom Beschlagteil 4B und damit gut zugänglich ausgebildet werden.

Der Montagevorgang lässt sich im Einzelnen wie folgt beschreiben.

In einem ersten Montageschritt wird die Buchse 12 mit ihren Vorsprüngen 120 in die Ausnehmung 16 der Nockenscheibe 6B eingesteckt (siehe Fig. 5A).

In einem zweiten Montageschritt gemäß Fig. 5B wird die Welle 8 zunächst mit ihrem verjüngten Ende durch die Ausnehmung 16 der Nockenscheibe 6A geführt und dann in die Montagerichtung durch die Ausnehmung 16 der Nockenscheibe 6B geschoben, bis das verjüngte Ende in die Bohrung der Buchse 12 eingreift. In dieser Zwischenmontageposition greift die Welle 8 über Vorsprünge in die Ausnehmung 16 der Nockenscheibe 6A ein, so dass die Welle 8 verdrehfest mit der Nockenscheibe 6A verbunden ist. Eine axiale Verschiebung in oder entgegen der Montagerichtung der Welle 8 relativ zur Nockenscheibe 6A des tunnelseitigen Rastbeschlags 2 bleibt weiterhin möglich. Das verjüngte Ende der Welle 8 greift dabei in die Ausnehmung 16 der Nockenscheibe 6B des türseitigen Rastbeschlags 2 ein, wobei eine Verdrehung der Welle 8 in der Bohrung der Buchse 12 noch möglich ist, um die Verdrehstellung der Welle 8 relativ zur Nockenscheibe 6B anzupassen. Dieses ist vorgesehen, um eine Verdrehung der Welle 8 derart zu ermöglichen, dass die Welle 8 in gleicher Winkelposition mit den Nockenscheiben 6A, 6B verbunden ist und die Synchronität der Rastbeschläge 2 im Betrieb gewährleistet ist.

In einem dritten Montageschritt gemäß Fig. 5C wird der Adapterbolzen 10 mit dem Zapfen 18 in die Bohrung der Buchse 12 eingesteckt und eine stoffschlüssige Verbindung über die Schweißtaschen 20 hergestellt, so dass der Adapterbolzen 10, die Buchse 12 und die Welle 8 verdrehfest und verschiebefest mit der Nockenscheibe 6B des türseitigen Rastbeschlags 2 verbunden sind. Eine zusätzliche Fixierung des gegenüberliegenden Endes der Welle 8 mit der Nockenscheibe 6A des tunnelseitigen Rastbeschlags erfolgt hingegen nicht, so dass auch in der Endmontageposition gemäß Fig. 5C eine zumindest geringfügige axiale Verschiebung der Welle 8 relativ zur Nockenscheibe 6A möglich bleibt und so auch im Betrieb der Beschlaganordnung Toleranzen ausgeglichen werden können.

Vorteilhaft bei dem geschilderten Montageverfahren ist, dass sämtliche Montageschritte außerhalb des Raums zwischen den Rastbeschlägen 2 durchgeführt werden können. Werden die Rastbeschläge 2 beidseitig eines Fahrzeugsitzes montiert, so muss nicht zwischen die Rastbeschläge 2 gegriffen werden. Die Montage kann vielmehr von außen erfolgen, indem die Welle 8 durch die Rastbeschläge 2 geschoben und dann am türseitigen Rastbeschlag fixiert wird.

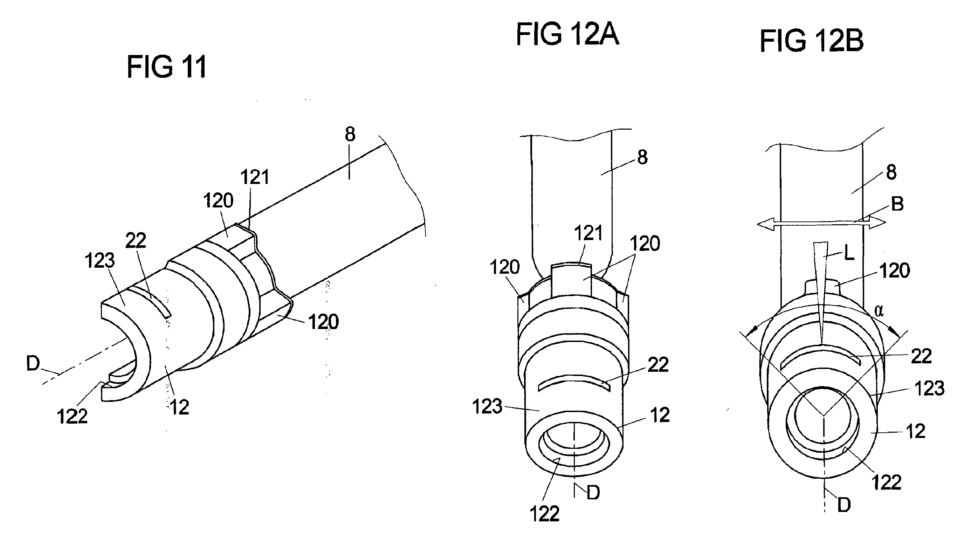

Ein modifiziertes Ausführungsbeispiel der Buchse 12 mit einer daran angeordneten, in Umfangsrichtung um die Buchse 12 ausgerichteten Schweißnaht 22 ist in Fig. 11 und 12A, 12B dargestellt. Die Buchse 12 weist, wie vorangehend geschildert, an ihrem einen Ende eine durch Vorsprünge 120 gebildete Außenkontur auf, die in die Ausnehmung 16 der das zweite Antriebselement ausbildenden Nockenscheibe 6B des türseitigen Beschlags 2 eingepresst wird. Stirnseitig ist an der Buchse 12 eine Einführschräge 121 ausgebildet, die das Einführen der Buchse 12 mit ihren Vorsprüngen 120 in die Ausnehmung 16 der Nockenscheibe 6B vereinfachen soll. An ihrem anderen Ende weist die Buchse 12 einen zylindrischen Abschnitt 123 auf, an dessen Mantelfläche umfänglich quer zur Drehachse D der Welle 8 die Schweißnaht 22 angeordnet ist.

Die Buchse 12 weist eine zentrale innere Bohrung 122 auf, in die zur Montage von der einen, in Fig. 11 hinteren Seite die Welle 8 mit ihrem verjüngten Ende und von der anderen Seite der Adapterbolzen 10 (siehe Fig. 1) eingesteckt wird. Über die in Umfangsrichtung verlaufende Schweißnaht 22 wird eine stoffschlüssige Verbindung zur drehfesten Fixierung der Welle 8 und des Adapterbolzens 10 an der Bohrung 122 der Buchse 12 hergestellt. Die Schweißnaht 22 kann dabei beispielsweise so in dem Bereich der Buchse 12, in dem die Welle 8 und der Adapterbolzen 10 in der Bohrung 122 aneinander stoßen, angebracht werden, dass über die eine Schweißnaht 22 sowohl die Welle 8 als auch der Adapterbolzen 10 stoffschlüssig mit der Buchse 12 verbunden werden. Ebenso ist jedoch denkbar, zwei getrennte Schweißnähte 22 vorzusehen, mit der einerseits eine stoffschlüssige Verbindung zwischen der Buchse 12 und der Welle 8 und andererseits eine stoffschlüssige Verbindung zwischen der Buchse 12 und dem Adapterbolzen 10 hergestellt werden.

Fig. 12A und 12B zeigen weitere Ansichten der Ausführungsform der Buchse 12 gemäß Fig. 11. Wie aus Fig. 12B ersichtlich, beschreibt die Schweißnaht 22 einen Umfangswinkel a an der Mantelfläche des zylindrischen Abschnitts 123 der Buchse 12, der zwischen 100° und 200°, bevorzugt zwischen 130° und 170° betragen kann. Die Länge der Schweißnaht 22 ist dabei anhand der Festigkeitsanforderungen der Verbindung zwischen Welle 8, Adapterbolzen 10 und Buchse 12 zu wählen.

Ebenso in Fig. 12B ist die Bewegungsrichtung B eines durch einen Laser L ausgebildeten Schweißwerkzeugs dargestellt, die aufgrund der Anordnung der Schweißnaht 22 quer zur Drehachse D der Welle 8 ebenfalls quer zur Drehachse D gerichtet ist.

Durch die Anordnung der Schweißnaht 22 quer zur Drehachse D können verschiedene Vorteile erreicht werden.

Zum einen kann durch das Vorsehen der Schweißnaht 22 quer zur Drehachse D die Geometrie der Buchse 12 vereinfacht werden, da Schweißtaschen (siehe Fig. 2) zur Anbringung der Schweißnaht entfallen können. Hierdurch vereinfacht sich die Herstellung der Buchse 12, und auch die Herstellungskosten für die Buchse 12 reduzieren sich.

Dadurch, dass keine Schweißtaschen mehr vorgesehen werden müssen, ist zudem die Festigkeit der Buchse 12 und damit der Verbindung des Adapterbolzens 10 und der Welle 8 mit der türseitigen Nockenscheibe 6B verbessert. Durch den Entfall der Schweißtaschen wird eine Schwächung des Querschnitts der Buchse 12 aufgrund einer abschnittsweisen Materialverdünnung vermieden.

Zum zweiten kann durch Anbringen der Schweißnaht 22 in Querrichtung der Montageprozess erleichtert werden, da die Schweißnaht 22 umfänglich in beliebigen Winkelpositionen an der Buchse 12 angebracht werden kann. Dadurch ist eine genaue Ausrichtung der Buchse 12 zum Schweißwerkzeug in Umfangsrichtung nicht mehr erforderlich.

Zum dritten ist durch Anordnung der Schweißnaht 22 in Querrichtung die Zugänglichkeit für ein Schweißwerkzeug erheblich verbessert, da die Schweißnaht 22 mit Abstand vom Rastbeschlag 200, insbesondere dem zweiten Beschlagteil 4b angebracht werden kann und ein Verfahren des Schweißwerkzeugs in axialer Richtung nicht erforderlich ist. Die Herstellung der Schweißnaht 22 kann vielmehr durch ein lineares Verfahren des Schweißwerkzeugs in Querrichtung erfolgen.

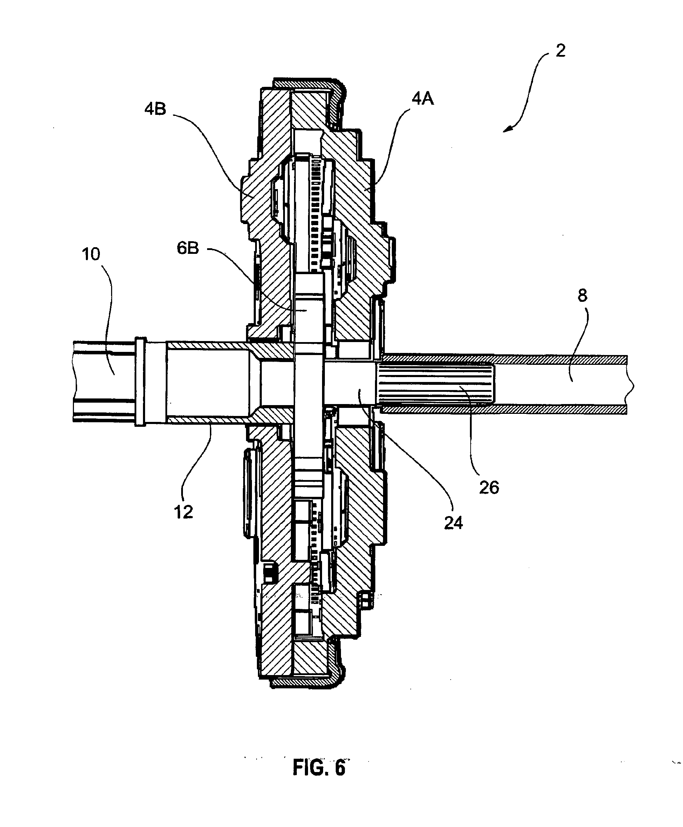

Aus Fig. 6 ist eine zweite Ausführungsvariante für den türseitigen Rastbeschlag 200 dargestellt. In dieser Ausführungsvariante weist der Adapterbolzen 10 einen Langzapfen 24 auf, der durch die gesamte Buchse 12 hindurch gesteckt ist. Endseitig weist das zylindrische Ende des Langzapfens 24 eine umlaufende Rändelung 26 auf, die gebildet ist durch einzelne, um den Umfang verteilt angeordnete und vorzugsweise nach Art von Zähnen spitz zulaufende Stege. Das stirnseitige Ende weist eine konische Einführschräge auf.

Die Verbindung zwischen dem Adapterbolzen 10 und der Buchse 12 erfolgt wie Ausführungsbeispiel der Fig. 5C über eine Schweißverbindung.

Bei der Montage des in Fig. 6 dargestellten türseitigen Rastbeschlags 2 wird wiederum zunächst die Buchse 12 in die Nockenscheibe 6B insbesondere eingepresst. Anschließend wird der Adapterbolzen 10 durch die Buchse 12 hindurch gesteckt und in die gewünschte Drehposition gebracht. Schließlich wird die Welle 8 von der Tunnelseite her auf den Langzapfen 24 aufgepresst. Aufgrund dessen Rändelung 26 wird hierbei ebenfalls eine in Umfangsrichtung wirksame Formschlussverbindung ausgebildet. Beim Einpressen formen sich daher die einzelnen Längsstege der Rändelung 26 in den Innenmantel der Hohlwelle 8 ein.

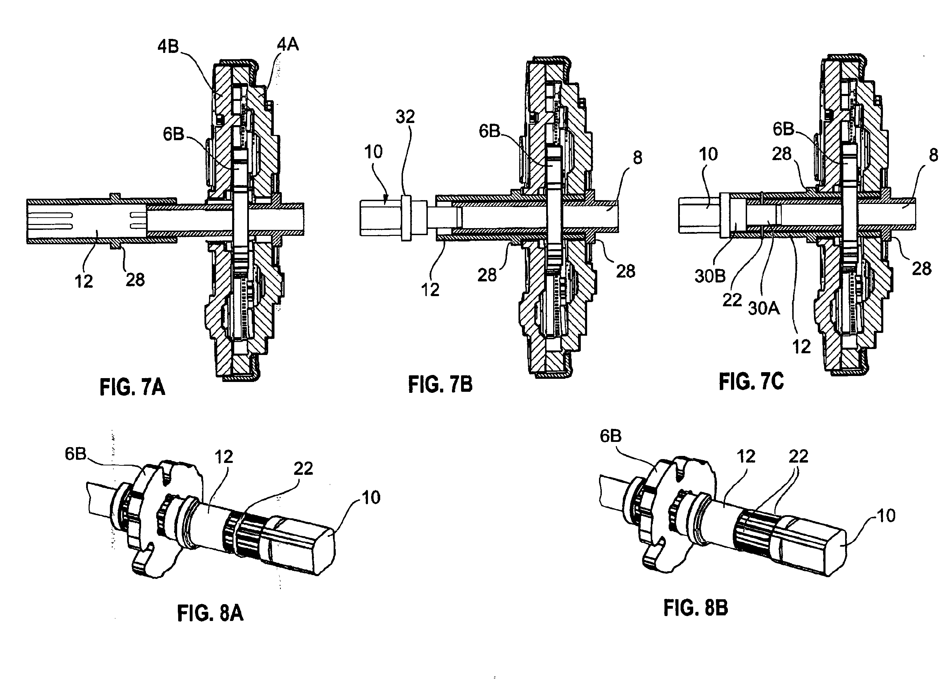

Eine dritte Ausführungsvariante des türseitigen Rastbeschlags 2 in zwei unterschiedlichen Alternativen wird nunmehr anhand der Figuren 7A bis C, 8A, 8B und 9 näher erläutert.

Im Unterschied zu den vorangegangenen Ausführungsbeispielen ist die Buchse 12 nicht in die Ausnehmung 16 eingepresst, sondern lediglich drehfest eingesteckt. In Axialrichtung ist keine feste Verbindung zwischen der Buchse 12 und der Nockenscheibe 6B ausgebildet, so dass auftretende Axialkräfte nicht auf die Nockenscheibe 6B übertragen werden. Für diese Ausführungsvariante weist sowohl die Buchse 12 als auch die Welle 8 einen als umlaufenden Bundsteg ausgebildeten Anschlag 28 auf. Die Welle 8 ist wiederum in die Buchse 12 eingesteckt. Mit den beiden Anschlägen 28 liegen diese beiden Bauteile jeweils an den beiden Beschlagteilen 4A,B an, so dass ihre axiale Position festgelegt ist. Anschließend wird der Adapterbolzen 10 sowohl in die Buchse 12 als auch in die Welle 8 eingesteckt. Er weist hierzu zwei sich in Axialrichtung einander anschließende Zapfen 30A,B mit unterschiedlichem Durchmesser auf. Der vordere Zapfen 30A mit dem kleineren Durchmesser ist in die Welle 8 eingesteckt, während der hintere Zapfen 308 mit dem größeren Durchmesser in die Buchse 12 eingesteckt ist. Der Adapterbolzen 10 stützt sich an der Buchse 12 mit einem Bund 32 ab. Bei der Ausführungsvariante gemäß den Fig. 7 und 8 erfolgt die Fixierung der Drehpositionen mittels einer stoffflüssigen Verbindung durch Schweißen. In den Fig. 8A,B sind hierbei unterschiedlichen Positionen für mögliche Schweißnähte 22 gezeigt. Diese können in Axialrichtung verlaufend in den Schweißtaschen 20, ringförmig oder unterbrochen umlaufend, oder auch als einzelne Schweißpunkte ausgebildet sein. Wie aus Fig. 7C zu entnehmen ist, kann durch eine einzige beispielsweise ringförmig umlaufende Schweißnaht 22 im Bereich der Welle 8 und des vorderen Zapfens 30A eine drehfeste Verbindung zwischen den drei Bauteilen hergestellt werden.

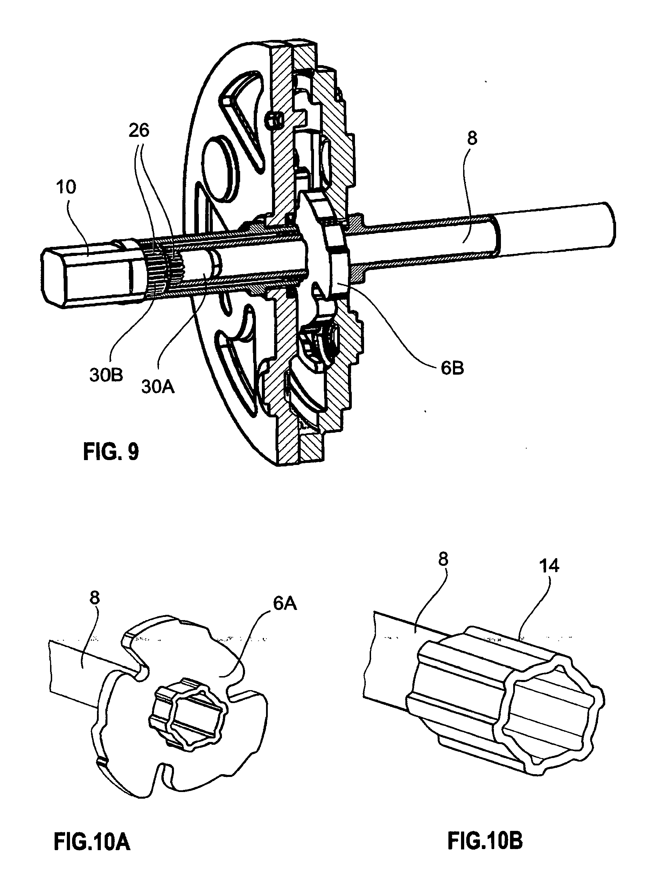

Alternativ zu der Schweißverbindung ist gemäß Fig. 9 eine Befestigung mittels einer einfachen Einpressverbindung vorgesehen. Hierzu weisen die beiden Zapfen 30A,B jeweils eine umlaufende Rändelung 26 auf, mit der sie jeweils eine formschlüssige Einpressverbindung mit der Innenwandung der Buchse 12 bzw. der Innenwandung der Welle 8 ausbilden.

In den Fig. 10A,B ist schließlich noch eine alternative Ausführungsvariante für die Ausgestaltung der Außenkontur 14 sowie der entsprechenden Innenkontur der Ausnehmung 16 dargestellt. Bei dieser Ausführungsvariante ist eine im Wesentlichen hexagonale Mehrkantstruktur im Unterschied zu der triangularen Mehrkantstruktur gemäß den Fig. 3 und 4 vorgesehen.

Wie insbesondere aus der Fig. 10B deutlich wird, ist die Welle 8 an ihrem tunnelseitigen Ende durch einen Umformvorgang aufgeweitet, weist also einen größeren Durchmesser als in ihrem restlichen Bereich auf. Hierdurch kann die Welle 8 jeweils bei der Montage von der Tunnelseite her eingeschoben und bis zum gegenüberliegenden, türseitigen Rastbeschlag durchgeschoben werden, wo die Welle 8 mit ihrem zylindrischen Ende entweder in die Buchse 12 eingeführt und/oder auf den Zapfen 18, 24, 30A aufgeschoben bzw. aufgepresst wird.

Durch die hier beschriebene Beschlaganordnung mit der speziellen Verbindung zwischen der Welle 8 und dem jeweiligen Rastbeschlag 200 werden folgende wesentlichen Vorteile erreicht:
- Aufgrund des Gleichteileprinzips sind alle Rastbeschläge 2 identisch ausgebildet, lediglich in einem letzten Montageschritt wird die Position des jeweiligen Beschlags durch die Anordnung der Buchse 12 und insbesondere des Adapterbolzens 10 festgelegt;
- durch die freie Drehbarkeit.. der einzelnen Bauteile in der Zwischenmontageposition auf der Türseite zueinander ist eine synchrone Einstellung der Drehposition der beiden Nockenscheiben 6A,B sichergestellt;
- der Adapterbolzen 10 lässt sich problemlos in eine gewünschte Drehstellung aufgrund der freien Beweglichkeit in der Zwischenmontagestellung bringen.

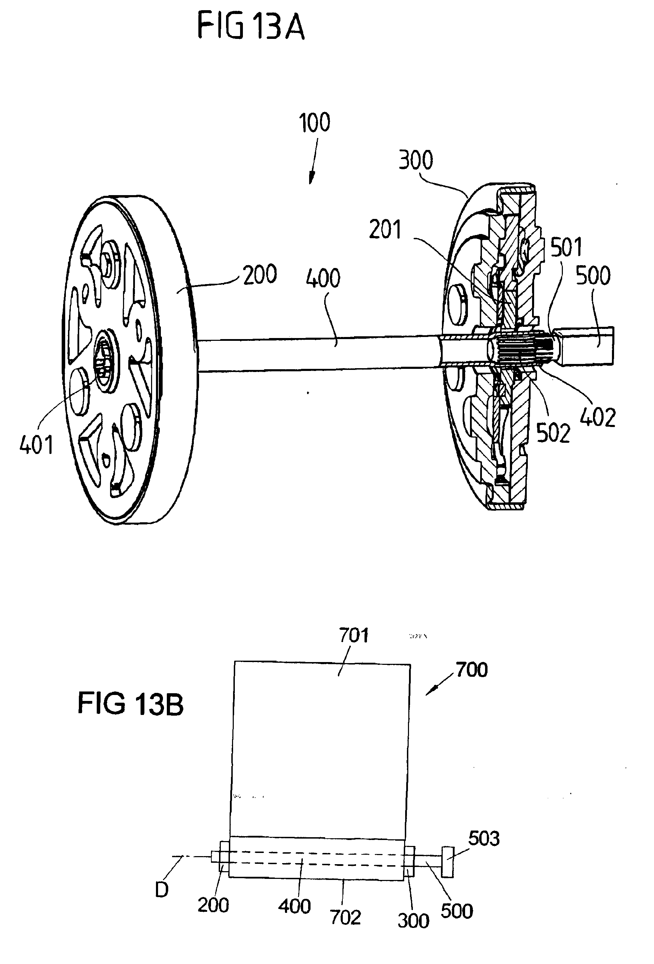

Fig. 13A zeigt eine weitere Ausführungsform einer Beschlaganordnung 100 mit einem ersten Rastbeschlag 200 und einem zweiten Rastbeschlag 300, die, wie in Fig. 13B dargestellt, beidseitig eines Fahrzeugsitzes 700 angeordnet werden. Die Beschlaganordnung 100 kann beispielsweise zur Neigungseinstellung einer Rückenlehne 701 dienen, wobei die Neigungseinstellung der Rückenlehne 701 durch die Rastbeschläge 200, 300 verrastet und somit zu einem Sitzteil 702 des Fahrzeugsitzes 700 arretiert wird.

Die Rastbeschläge 200, 300 der Beschlaganordnung 100 sind über eine Welle 400 miteinander verbunden. Die Welle 400 steht mit jeweils einem Ende 401, 402 mit einem Antriebselement in Form einer Nockenscheibe 201 des Rastbeschlags 200 und des Rastbeschlags 300 in Wirkverbindung und dient zur Betätigung der Nockenscheiben 201 des Rastbeschlags 200 und des Rastbeschlags 300 und somit zur Betätigung der Beschlaganordnung 100.

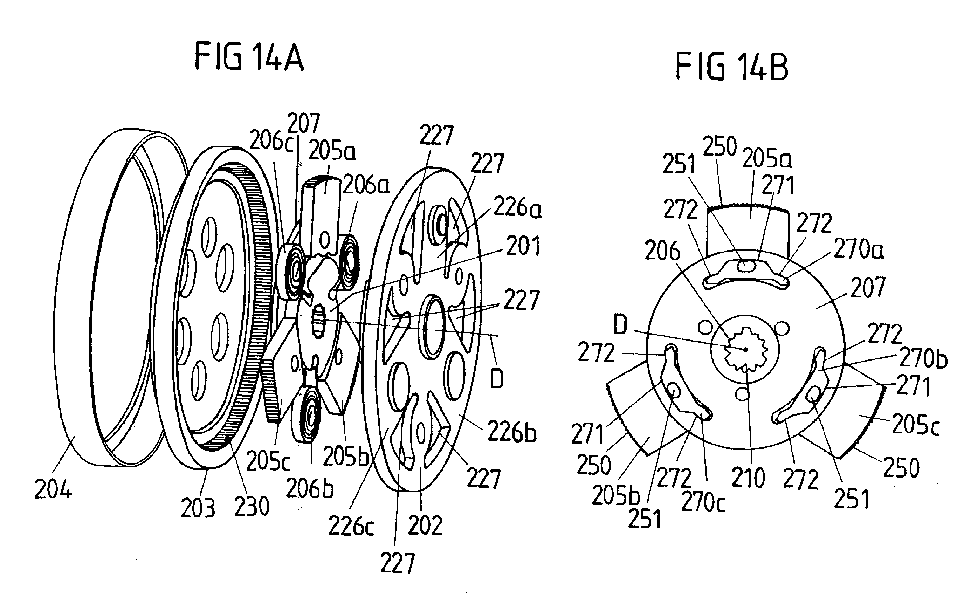

Eine Ausführungsform eines Rastbeschlags 200, 300 der Beschlaganordnung 100 ist in Fig. 14A und Fig. 14B dargestellt. Der Rastbeschlag 200, 300 weist ein erstes Beschlagteil 202 und ein zweites Beschlagteil 203 auf, die über eine Einfassung 204 miteinander verbunden sind. Das erste Beschlagteil 202 ist beispielsweise mit dem Sitzteil 702 eines Fahrzeugsitzes 700 und das zweite Beschlagteil 203 mit der Rückenlehne 701 des Fahrzeugsitzes 700 verbunden. Die Einfassung 204 umgreift das Beschlagteil 203 und ist drehfest mit dem Beschlagteil 202 verbunden, so dass das Beschlagteil 203 in der Einfassung 204 drehbar und die Rückenlehne 701 somit relativ zum Sitzteil 72 verschwenkbar ist.

Die Funktion derartiger Rastbeschläge 200, 300 ist an sich bekannt. An dem Beschlagteil 202 sind in in Fig. 14A angedeuteten Führungskanälen 226a, 226b, 226c, die hin zum Beschlagteil 203 offen sind, Riegelelement 205a, 205b, 205c geführt. Die Führungskanäle 226a, 226b, 226c werden seitlich durch Führungssegmente 227, die hin zum Beschlagteil 203 vom Beschlagteil 202 vorstehen, begrenzt, so dass die Riegelelemente 205a, 205b, 205c lediglich in radialer Richtung relativ zum Beschlagteil 202 verschiebbar sind. Um eine Drehachse D verschwenkbar zum Beschlagteil 202 ist das Antriebselement in Form der Nockenscheibe 201 gelagert, das über Federelemente 206a, 206b, 206c in Richtung einer Verraststellung vorgespannt ist. In dieser Verraststellung wirkt die Nockenscheibe 201 mit äußeren Nocken auf die Riegelelemente 205a, 205b, 205c ein und drückt diese radial nach außen, so dass Verzahnungen 250 an den Riegelelementen 205a, 205b, 205c mit einer Verzahnung 230 am Beschlagteil 203 in Eingriff sind. In dieser Verraststellung ist die Position des Beschlagteils 202 somit relativ zum Beschlagteil 203 verrastet.

Zur Betätigung wird die Nockenscheibe 201 um die Drehachse D verdreht. Wie in Fig. 14B dargestellt, dreht sich dabei zusammen mit der Nockenscheibe 201 eine mit der Nockenscheibe 201 fest verbundene Steuerscheibe 207 um die Drehachse D, die über Steuerkulissen 270a, 270b, 270c auf an den Riegelelementen 205a, 205b, 205c angeordnete Gleitelemente 251 einwirkt.

Durch eine Verdrehbewegung der Steuerscheibe 207 zieht die Steuerscheibe 207 die Riegelelemente 205a, 205b, 205c über Kulissenabschnitte 271, 272 der Führungskulissen 270a, 270b, 270c in eine radial hin zur Drehachse D versetzte Stellung, so dass die Verzahnungen 250 der Riegelelemente 205a, 205b, 205c außer Eingriff mit der Verzahnung 230 am Beschlagteil 203 gelangen. In dieser nicht verrasteten Stellung befinden sich die Gleitelemente 251 der Riegelelemente 205a, 205b, 205c im Bereich eines Kulissenabschnitts 272 der jeweils zugeordneten Steuerkulisse 270a, 270b, 270c der Steuerscheibe 207.

In der nicht verrasteten Stellung sind das Beschlagteil 202 und das Beschlagteil 203 relativ zueinander verschwenkbar, so dass die Rückenlehne 701 relativ zum Sitzteil 702 des Fahrzeugsitzes 700 (siehe Fig. 13B) verschwenkt werden kann. Ist die gewünschte Neigungsstellung erreicht, so verschwenkt durch die Federvorspannung der Federelemente 206a, 206b, 206c die Nockenscheibe 201 automatisch zurück in die Verraststellung, drückt die Riegelelemente 205a, 205b, 205c radial nach außen und verrastet somit das Beschlagteil 202 wiederum mit dem Beschlagteil 203.

Zur Betätigung der Nockenscheibe 201 eines jeden Rastbeschlags 200, 300 sind die Nockenscheiben 201 der Rastbeschläge 200, 300 über eine Welle 400 miteinander verbunden. Im Bereich des Rastbeschlags 300 ist die Welle 400 dabei über einen Adapterbolzen 500 (siehe Fig. 13A) mit einem Betätigungshebel 503 (sieh Fig. 13B) verbunden, über den ein Nutzer die Beschlaganordnung 100 betätigen kann.

Bei der Ausgestaltung gemäß Fig. 13A durchgreift die Welle 400 eine Ausnehmung 210 der Nockenscheibe 201, wobei der Adapterbolzen 500 mit einem Zapfen 501 in eine innere, entlang der Drehachse D gerichtete Bohrung der Welle 400 eingreift. Der Zapfen 501 weist eine Riffelung 502 auf, die zur Verbindung des Adapterbolzens 500 mit der Welle 400 in die Bohrung der Welle 400 eingepresst wird und dadurch die Welle 400 mit der Ausnehmung 210 der Nockenscheibe 201 verpresst.

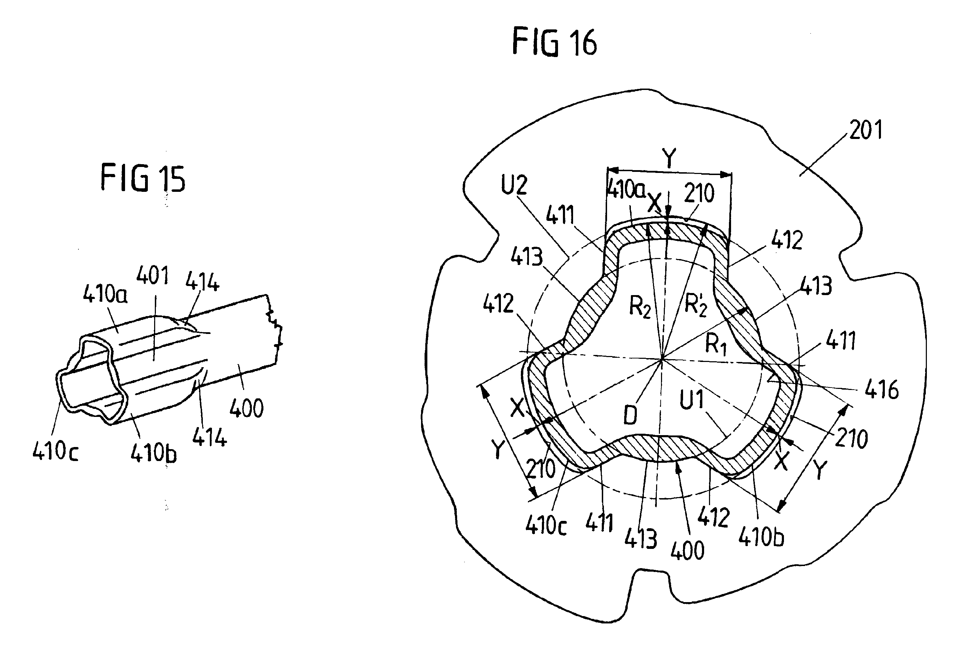

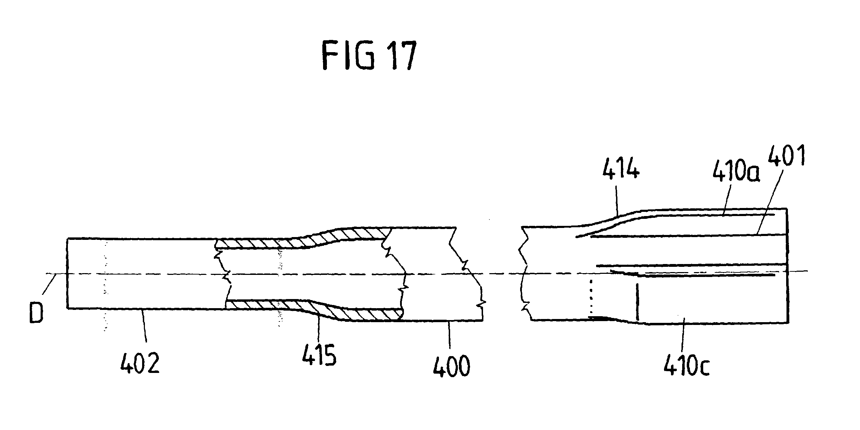

Nachfolgend soll die Ausgestaltung der Welle 400 am Ende 401 zur Verbindung mit der Nockenscheibe 201 des Rastbeschlags 200 anhand Fig. 15 bis 17 erläutert werden. Fig. 15 zeigt hier eine perspektivische Ansicht des Endes 401 der Welle 400, Fig. 16 eine Querschnittansicht des Endes 401 der Welle 400 in der Nockenscheibe 201 des Rastbeschlags 200 und Fig. 17 eine teilweise geschnittene Längsansicht der Welle 400.

Die Welle 400 weist im Bereich des Endes 401 Vorsprünge 410a, 410b, 410c auf, die, wie in Fig. 16 veranschaulicht ist, radial von einem Umfang U1 der Welle 400 nach außen hin vorspringen. Die Vorsprünge 410a, 410b, 410c weisen dabei jeweils zwei Flanken 411, 412 auf, die im Abstand Y zueinander angeordnet sind und im Wesentlichen parallel zueinander verlaufen. Die Welle 400 weist weiterhin Abschnitte 413 auf, die Kreissegmenten eines Kreises mit Radius R1 um die Drehachse D entlang des Umfangs U1 entsprechen.

Zur Montage wird die Welle 400 in eine Ausnehmung 210 der Nockenscheibe 201 des Rastbeschlags 200 eingeschoben. Die Welle 400 tritt dabei über die Vorsprünge 410a, 410b, 410c mit der Ausnehmung 210 der Nockenscheibe 201 in Wirkverbindung, wobei die Welle 400 axial nicht in der Nockenscheibe 201 gesichert ist, die Wirkverbindung somit lediglich in der Ebene senkrecht zur Drehachse D hergestellt wird.

Zur Herstellung der Wirkverbindung tritt die Welle 400 über die Flanken 411, 412 und die Abschnitte 413 mit der Ausnehmung 210 in Kontakt. Die Flanken 411, 412 einerseits und die Abschnitte 413 andererseits dienen dabei unterschiedlichen Zwecken.

Über die Flanken 411, 412 der Vorsprünge 410a, 410b, 410c wird insbesondere eine Wirkverbindung in Umfangsrichtung der Welle 400 zur Übertragung eines Drehmoments von der Welle 400 über die Ausnehmung 210 auf die Nockenscheibe 201 hergestellt. Durch die parallele Anordnung, der Flanken 411, 412 wird eine vorteilhafte Kraftübertragung bereitgestellt, bei der die Verkeilwirkung der Welle 400 in der Ausnehmung 210 der Nockenscheibe 201 bei Übertragung eines Drehmoments reduziert ist.

Gleichzeitig ist die durch die Vorsprünge 410a, 410b, 410c gebildete Kontur einfach herstellbar, indem ein Formprofilstück in Richtung der Drehachse D in eine zentrale Bohrung 416 der Welle 400 eingeschoben und das Profil des Formprofilstücks durch Aufbringen einer Presskraft dem Ende 401 der Welle 400 aufgeprägt wird. Durch die parallele Anordnung der Flanken 411, 412 werden Hinterschnitte in der Innenkontur der Bohrung 416 vermieden, so dass eine Herstellung mittels Kaltverformung möglich ist. Die parallele Anordnung der Flanken 411, 412 stellt einen Kompromiss zwischen einer optimalen Kraftübertragung in Umfangsrichtung einerseits und einer leichten Herstellbarkeit der Welle 400 andererseits dar. Für eine optimale Kraftübertragung müssten die Flanken 411, 412 an sich radial zur Drehachse D angeordnet sein. Bei einer solchen radialen Anordnung kann ein reines Drehmoment unter Vermeidung einer radialen Kraftwirkung übertragen werden. Bei einer solchen radialen Anordnung der Flanken 411, 412 würden jedoch Hinterschnitte in der Innenkontur der Bohrung 416 auftreten, so dass eine Herstellung mittels Kaltverformung nicht mehr möglich wäre. Daher sind die Flanken 411, 412 parallel angeordnet, so dass eine Kaltverformung möglich bleibt und gleichzeitig eine vorteilhafte Kraftübertragung bei vornehmlicher Übertragung eines Drehmoments erreicht wird.

Die Vorsprünge 410a, 410b, 410c stehen nach außen vom Umfang U1 vor. Dadurch, dass die Flanken 411, 412 nach außen stehen, wird eine vorteilhafte Hebelwirkung erreicht, die im Vergleich zu einer Einformung eines Profils vom Umfang U1 nach innen eine größere Kraftübertragung bei geringerer Belastung ermöglicht.

Die Abschnitte 413, die entlang des Umfang U1 im Radius R1 von der Drehachse D angeordnet sind, dienen der radialen Fixierung und der Zentrierung der Welle 400 in der Ausnehmung 210 der Nockenscheibe 201. Die Abschnitte 413 treten beim Einschieben der Welle 400 in die Ausnehmung 210 mit der Ausnehmung 210 in Wirkverbindung und stützen die Welle radial relativ zur Nockenscheibe 201 ab.

Wie in Fig. 16 dargestellt ist, weisen die Vorsprünge 410a, 410b, 410c in radialer Richtung einen Abstand X von der Ausnehmung 210 auf, bedingt durch den im Vergleich zum Radius R2' der Ausnehmung 210 kleineren Außenradius R2 der Vorsprünge 410a, 410b, 410c, deren Außenkontur auf dem Umfang U2 liegt. Durch den Abstand X der Vorsprünge 410a, 410b, 410c von der Ausnehmung 210 wird erreicht, dass beim Einschieben der Welle 400 in die Ausnehmung 210 eine Zentrierung lediglich über die Abschnitte 413 auf dem Umfang U1 erfolgt, nicht jedoch über die auf dem Umfang U2 gelegenen äußeren Abschnitte der Vorsprünge 410a, 410b, 410c. Dadurch wird für die Zentrierung der Welle 400 in der Ausnehmung 210 eine Überbestimmung vermieden.

Denkbar ist grundsätzlich auch, die Außenkontur der Vorsprünge 410a, 410b, 410c formschlüssig mit der Ausnehmung 210 auszubilden und einen Abstand zwischen den Abschnitten 413 und der Ausnehmung 210 vorzusehen. Die Zentrierung erfolgt dann ausschließlich über die Außenkontur der Vorsprünge 410a, 410b, 410c, wobei wiederum eine Überbestimmung vermieden ist.

Fig. 17 schließlich stellt eine gesonderte, teilweise geschnittene Ansicht der Welle 400 dar. Die Welle 400 weist im Bereich der Vorsprünge 410a, 410b, 410c am Ende 401 eine Einführschräge 414 und in Richtung der Drehachse D hin zum Ende 402 versetzt eine weitere Einführschräge 415 auf, die ein Einschieben der Welle 400 in die Ausnehmungen 210 der Nockenscheiben 21 der Rastbeschläge 200, 300 erleichtern sollen.

Im Bereich des Endes 402 ist die Welle 400 verjüngt ausgebildet. Die Welle 400 ist innen hohl und kann beispielsweise als Stahlrohr ausgebildet sein.

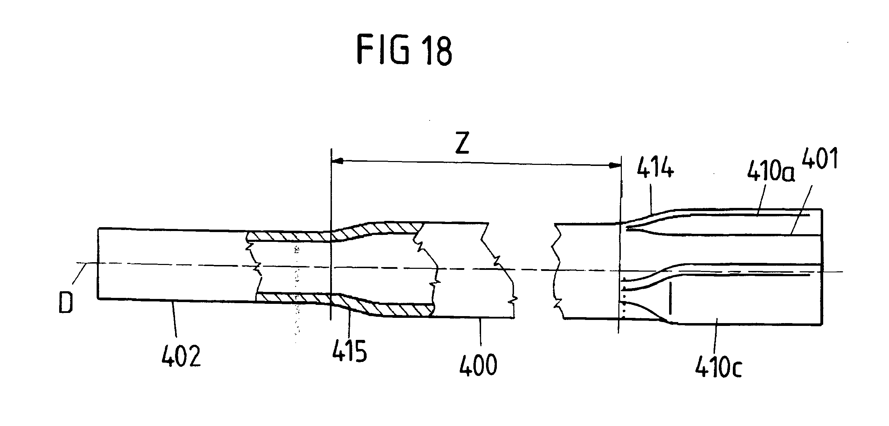

Fig. 18 stellt eine weitere Ausführungsform einer Welle 400 dar, die sich von der Ausführungsform der Welle 400 gemäß Fig. 17 dadurch unterscheidet, das zur Ausbildung der Einführschräge 414 die Vorsprüngen 410a, 410b, 410c spitz zulaufen und sich somit in Umfangsrichtung zur Mitte der Welle 400 hin verjüngen (in Fig. 18 verjüngen sich die Vorsprünge 410a, 410b, 410c nach links hin). Dadurch wird erreicht, dass die Welle 400 beim Einführen in die Ausnehmung 210 der Nockenscheibe 201 des Rastbeschlags 200 (siehe Fig. 13A) automatisch in rotatorischer Weise so verdreht wird, dass die Vorsprünge 410a, 410b, 410c in die Ausnehmung 210 gleiten können und ein Verkeilen der Welle 400 mit der Ausnehmung 210 beim Einführen verhindert ist.

Wie in Fig. 18 dargestellt ist, sind die Einführschrägen entlang der Drehachse D mit einem Abstand Z versetzt zueinander angeordnet. Der Abstand Z ist dabei kleiner als der Abstand der beiden Rastbeschläge 200, 300 zueinander. Dadurch wird erreicht, dass beim Einführen der Welle 400 zunächst die Einführschräge 414 mit der Ausnehmung 210 der Nockenscheibe 201 des Rastbeschlags 200 in Kontakt tritt und erst anschließend, nachdem sich die Vorsprünge 410a, 410b, 410c bereits in der Ausnehmung 210 der Nockenscheibe 201 des Rastbeschlags 200 befinden, die Einführschräge 415 in den Bereich der Ausnehmung 210 der Nockenscheibe 201 des Rastbeschlags 300 kommt.

Die (in Fig. 18 links dargestellte) Einführschräge 415 wird nicht vollständig in die Bohrung der Buchse eingeführt, sondern nur soweit eingesteckt, dass eine Fertigungstoleranz in der Passgenauigkeit der Welle 400 mit der Bohrung ausgeglichen wird (siehe Fig. 1). Die Einführschräge 415 dient damit insbesondere auch der Zentrierung der Welle 400 in der Bohrung und dem Ausgleich von Fertigungstoleranzen.

### Bezugszeichenliste

- 2: Rastbeschlag
- 4A: erstes Beschlagteil
- 4B: zweites Beschlagteil
- 6A: tunnelseitiges Antriebselement
- 6B: türseitiges Antriebselement
- 8: Welle
- 10: Adapterbolzen
- 12: Buchse
- 14: Außenkontur
- 16: Ausnehmung
- 18: Zapfen
- 20: Schweißtasche
- 22: Schweißnaht
- 24: Langzapfen
- 26: Rändelung
- 28: Anschlag
- 30A: vorderer Zapfen
- 30B: hinterer Zapfen
- 32: Bund
- 100: Rastbeschlaganordnung
- 120: Vorsprünge
- 121: Einführschräge
- 122: Bohrung
- 123: Zylindrischer Abschnitt
- 200, 300: Rastbeschlag
- 201: Nockenscheibe
- 202: Beschlagteil
- 203: Beschlagteil
- 204: Einfassung
- 205a, 205b, 205c: Riegelelement
- 206a, 206b, 206c: Federelement
- 207: Steuerscheibe
- 210: Ausnehmung
- 212, 213: Abschnitt
- 226a, 226b, 226c: Führungskanal
- 227: Führungssegment
- 230: Verzahnung
- 250: Verzahnung
- 251: Gleitelement
- 270a, 270b, 270c: Steuerkulisse
- 271, 272: Kulissenabschnitt
- 400: Welle
- 401, 402: Ende
- 410a, 410b, 410c: Vorsprung
- 411, 412: Flanken
- 413: Abschnitt
- 414, 415: Einführschräge
- 416: Bohrung
- 500: Adapterbolzen
- 501: Zapfen
- 502: Riffelung
- 503: Betätigungshebel
- 700: Fahrzeugsitz
- 701: Lehne
- 702: Sitzteil
- α: Umfangswinkel
- B: Bewegungsrichtung
- D: Drehachse
- L: Laser
- M: Montagerichtung
- R1, R2, R2': Radius
- U1, U2: Umfang
- X, Y, Z: Abstand

## Patentansprüche

1. Beschlaganordnung für einen Sitz, insbesondere für einen Fahrzeugsitz, mit einem ersten und einem zweiten Beschlag (2; 200, 300), die jeweils ein erstes und ein zweites Antriebselement (6A, 6B; 201) umfassen, die jeweils eine Ausnehmung (16; 210) mit einer Innenkontur aufweisen, sowie mit einer die beiden Beschläge (2; 200, 300) verbindenden Welle (8; 400) und mit einem Verstellelement (10; 500) zur Betätigung der Beschläge (2; 200, 300), wobei
- die Welle (8; 400) ein erstes Ende mit einer Außenkontur (14) zum formschlüssigen Einstecken in das erste Antriebselement (6A; 201) und ein zweites insbesondere zylindrisches Ende aufweist,
- in einer Zwischenmontageposition das zweite Antriebselement (6B; 201), das zweite Ende der Welle (8; 400) und das Verstellelement (10; 500) in einer beliebigen Drehposition zueinander positionierbar sind und
- Mittel zur Fixierung der Drehposition zwischen der Welle (8; 400), dem zweiten Antriebselement (6B; 201) und dem Verstellelement (10; 500) vorgesehen sind, so dass in einer Endmontageposition die beiden Antriebselemente (6A, 6B; 201), die Welle (8; 400) und das Verstellelement (10; 500) drehfest miteinander verbunden sind,
wobei die Mittel zur Fixierung eine Buchse (12) umfassen, die formschlüssig in die Ausnehmung (16; 210) des zweiten Antriebselements (6B; 201) eingeführt ist, wobei das zweite Ende der Welle (8; 400) und das Verstellelement (10; 500) in die Buchse (12) eingesteckt sind.

2. Beschlaganordnung nach Anspruch 1, wobei das Verstellelement (10; 500) als ein Adapterbolzen für die Anordnung eines Betätigungshebels ausgebildet ist.

3. Beschlaganordnung nach einem der vorhergehenden Ansprüche, wobei als Mittel zur Fixierung der Drehposition eine formschlüssige Einpressverbindung zwischen zumindest zwei der drei Bauteile Welle (8; 400), Verstellelement (10; 500) und zweites Antriebselement (6B; 201) vorgesehen ist.

4. Beschlaganordnung nach Anspruch 3, wobei für die formschlüssige Einpressverbindung zumindest eines der Bauteile eine Rändelung (26; 502) aufweist.

5. Beschlaganordnung nach einem der Ansprüche 1 bis 4, wobei die Buchse (12) in die Ausnehmung (16; 210) des zweiten Antriebselements (6B; 201) eingepresst oder verschweißt ist.

6. Beschlaganordnung nach Anspruch 5, wobei als Mittel zur Fixierung der Drehposition eine stoffschlüssige Verbindung, insbesondere Schweißverbindung, zwischen zumindest zwei der Bauteile Welle (8; 400), Verstellelement (10; 500), Buchse (12) und zweites Antriebselement (6B; 201) vorgesehen ist.

7. Beschlaganordnung nach Anspruch 5 oder 6, wobei
- das Verstellelement (10; 500) endseitig zwei in axialer Richtung aneinander anschließende Zapfen (30A, 30B) aufweist, die an die Buchse (12) bzw. an die Welle (8; 400) angepasst sind, oder
- das Verstellelement (10; 500) und die Welle (8; 400) jeweils in die Buchse (12) eingesteckt und mit dieser jeweils unmittelbar stoffschlüssig verbunden sind oder
- das Verstellelement (10; 500) einen Langzapfen (24) aufweist, der durch die Buchse (12) hindurchgesteckt ist und an dem die Welle (8; 400) befestigt ist.

8. Beschlaganordnung für einen Sitz, insbesondere für einen Fahrzeugsitz, mit
- einem ersten Beschlag (2; 200), der ein erstes Antriebselement (6A; 201) aufweist,
- einem zweiten Beschlag (2; 300), der ein zweites Antriebselement (6B; 201) aufweist,
- einer den ersten und den zweiten Beschlag (2; 200, 300) verbindenden, sich entlang einer Drehachse (D) erstreckenden Welle (8; 400), die ein formschlüssig mit dem ersten Antriebselement (6A; 201) verbundenes erstes Ende und ein mit dem zweiten Antriebselement (6B; 201) verbundenes zweites Ende aufweist,
- einem Verstellelement (10; 500) zur Betätigung der Beschläge (2; 200, 300) und
- einer Buchse (12), die das zweite Ende der Welle (8; 400), das zweite Antriebselement (6B; 201) und das Verstellelement (10; 500) drehfest miteinander verbindet und dazu eine stoffschlüssige Verbindung (22) aufweist,
**dadurch gekennzeichnet,**
**dass** das zweite Ende der Welle (8; 400) und das Verstellelement (10; 500) in eine Bohrung (122) der Buchse (12) eingesteckt sind.

9. Beschlaganordnung nach Anspruch 8, wobei die stoffschlüssige Verbindung (22) zwischen der Buchse (12) einerseits und der Welle (8; 400) und/oder dem Verstellelement (10; 500) andererseits hergestellt ist.

10. Beschlaganordnung nach Anspruch 8 oder 9, wobei die stoffschlüssige Verbindung als Schweißverbindung mit einer Schweißnaht (22) ausgebildet ist, wobei die Schweißnaht (22) quer zur Drehachse (D) der Welle (8; 400) an der Buchse (12) angeordnet ist oder wobei die Schweißnaht (22) in Umfangsrichtung an einer Mantelfläche eines zylindrischen Abschnitts (123) der Buchse (12) angeordnet ist und dabei einen Umfangswinkel (α) zwischen 100° und 200° beschreibt.

11. Beschlaganordnung nach einem der vorangehenden Ansprüche, wobei am ersten Ende der sich entlang einer Drehachse (D) erstreckenden Welle (8; 400) zur Herstellung einer formschlüssigen Wirkverbindung mindestens ein radial zur Drehachse von einem ersten Umfang (U1) der Welle (8; 400) vorspringender Vorsprung (410a, 410b, 410c) ausgebildet ist, der zwei Flanken (411, 412) aufweist, die zumindest abschnittsweise parallel zueinander verlaufen und die mit dem ersten Antriebselement (6A; 201) in Wirkverbindung stehen.

12. Beschlaganordnung nach Anspruch 11, wobei die Welle (8; 400) in Richtung der Drehachse (D) Einführschrägen (414, 415) zum Einführen der Welle (8; 400) in die Ausnehmung (16; 210) des ersten Antriebselements (6A; 201) aufweist.

13. Verfahren zur Montage einer Beschlaganordnung für einen Sitz, insbesondere für einen Fahrzeugsitz, wobei die Beschlaganordnung aufweist
- einen ersten und einen zweiten Beschlag (2; 200, 300), die jeweils ein erstes und ein zweites Antriebselement (6A, 6B; 201) umfassen, die jeweils eine Ausnehmung (16; 210) mit einer Innenkontur aufweisen,
- eine die beiden Beschläge (2; 200, 300) verbindende Welle (8; 400) sowie
- ein Verstellelement (10; 500) zur Betätigung der Beschläge (2; 200, 300), wobei die Welle (8; 400) mit ihrem ersten Ende in die Ausnehmung (16; 210) des ersten Antriebselements (6A; 201) formschlüssig und drehfest eingesteckt wird und auf Seiten des zweiten Beschlags (2; 300) die Welle (8; 400), das zweite Antriebselement (6B; 201) und das Verstellelement (10; 500) in eine Zwischenmontageposition gebracht werden, in der das zweite Antriebselement (6B; 201), die Welle (8; 400) und das Verstellelement (10; 500) zueinander verdrehbar sind und in einer gewünschten Drehposition zueinander positioniert werden und wobei anschließend die Welle (8; 400), das zweite Antriebselement (6B; 201) und das Verstellelement (10; 500) in der gewünschten Drehposition miteinander drehfest verbunden werden,
wobei die Welle (8; 400), das zweite Antriebselement (6B; 201) und das Verstellelement (10; 500) über eine Buchse (12), die formschlüssig in die Ausnehmung (16; 210) des zweiten Antriebselements (6B; 201) eingeführt ist, miteinander verbunden werden, indem das zweite Ende der Welle (8; 400) und das Verstellelement (10; 500) in die Buchse (12) eingesteckt werden.

14. Verfahren nach Anspruch 13, bei dem zur Herstellung einer formschlüssigen Wirkverbindung die sich entlang einer Drehachse (D) erstreckende Welle (8; 400) im Bereich des ersten Endes (401) mindestens einen radial zur Drehachse (D) von einem ersten Umfang (U1) der Welle (8; 400) vorspringenden Vorsprung (410a, 410b, 410c) zum Eingriff in eine Ausnehmung (16; 210) des Antriebselements (6A; 201) des ersten Rastbeschlags (2; 200) aufweist, wobei der mindestens eine Vorsprung (410a, 410b, 410c) zwei Flanken (411, 412) aufweist, die zumindest abschnittsweise parallel zueinander verlaufen, wobei zur Montage die Welle (8; 400) derart in die Ausnehmung (16; 210) des Antriebselements (6A; 201) des ersten Rastbeschlags (2; 200) eingeschoben wird, dass die Flanken (411, 412) mit der Ausnehmung (16; 210) des Antriebselements (6A; 201) in Wirkverbindung treten, wobei in der Zwischenmontageposition die Welle (8; 400) in Richtung der Drehachse (D) relativ zum ersten Rastbeschlag (2; 200) verschiebbar und um die Drehachse (D) relativ zum zweiten Rastbeschlag (2; 300) verdrehbar ist.

15. Verfahren nach Anspruch 14, wobei in einer Endmontageposition die Welle (8; 400) stoffschlüssig oder formschlüssig mit dem Antriebselement (6B; 201) des zweiten Rastbeschlags (2; 300) verbunden wird.

## Claims

1. Fixture arrangement for a seat, in particular for a vehicle seat, with a first and a second fixture (2, 200, 300) each of which comprises a first and a second driving element (6A, 6B, 201), each of which has a cavity (16, 210) with an internal contour, and a shaft (8, 400) connecting the two fixtures (2, 200, 300) and an adjusting element (10, 500) for operating the fixtures (2, 200, 300), whereby
- the shaft (8, 400) has a first end with an external contour (14) to be positively inserted into the first driving element (6A, 201) and a second, in particular cylindrical end,
- in an intermediate mounted position the second driving element (6B, 201), the second end of the shaft (8, 400) and the adjusting element (10, 500) can be positioned in any rotational position and
- means for fixation of the rotational position are provided between the shaft (8, 400), the second driving element (6B, 201) and the adjusting element (10, 500) so that in a final mounted position the two driving elements (6A, 6B, 201), the shaft (8, 400) and the adjusting element (10, 500) are connected with each other in a rotationally fixed manner,
whereby the means for fixation comprise a bush (12) which is positively inserted into the cavity (16, 210) of the second driving element (6B, 201), whereby the second end of the shaft (8, 400) and the adjusting element (10, 500) are inserted into the bush (12).

2. Fixture arrangement according to claim 1, whereby the adjusting element (10, 500) is designed as an adapter bolt for the arrangement of an actuator lever.

3. Fixture arrangement according to one of the preceding claims, whereby as a means for fixation of the rotational position a positive press-in connection is provided between at least two of the three parts shaft (8, 400), adjusting element (10, 500) and second driving element (6B, 201).

4. Fixture arrangement according to claim 3, whereby at least one of the parts comprises a knurling (26, 502) for the positive press-in connection.

5. Fixture arrangement according to one of the claims 1 to 4, whereby the bush (12) is pressed into the cavity (16, 210) of the second driving element (6B, 201) or is welded.

6. Fixture arrangement according to claim 5, whereby as a means for fixation of the rotational position a firmly bonded connection, in particular a welded joint, is provided between at least two of the parts shaft (8, 400), adjusting element (10, 500), bush (12) and second driving element (6B, 201).

7. Fixture arrangement according to claim 5 or 6, whereby
- the adjusting element (10, 500) comprises at the end two pins (30A, 30B) connected to each other in axial direction, which are adapted to the bush (12) or the shaft (8, 400), or
- the adjusting element (10, 500) and the shaft (8, 400) are in each case inserted into the bush (12) and are in each case immediately connected with said bush in a firmly bonded manner or
- the adjusting element (10, 500) comprises a longitudinal pin (24), which is inserted through the bush (12) and to which the shaft (8, 400) is fixed.

8. Fixture arrangement for a seat, in particular for a vehicle seat, with
- a first fixture (2, 200) having a first driving element (6A, 201),
- a second fixture (2, 300) having a second driving element (6B, 201),
- a shaft (8, 400) connecting the first and the second fixture (2, 200, 300) and extending along a rotational axis (D), which comprises a first end connected with the first driving element (6A, 201) in a positive manner and a second end connected with the second driving element (6B, 201),
- an adjusting element (10, 500) for actuating the fixtures (2, 200, 300) and
- a bush (12) connecting the second end of the shaft (8, 400), the second driving element (6B, 201) and the adjusting element (10, 500) with each other in a rotational fixed manner and comprises furthermore a firmly bonded connection (22).
**characterized in that**
the second end of the shaft (8, 400) and the adjusting element (10, 500) are inserted into a drilled hole (122) of the bush (12).

9. Fixture arrangement according to claim 8, whereby the firmly bonded connection (22) is provided between the bush (12) on the one hand and the shaft (8, 400) and/or the adjusting element (10, 500) on the other hand.

10. Fixture arrangement according to claim 8 or 9, whereby the firmly bonded connection is formed as a welded joint with a welded seam (22), whereby the welded seam (22) is arranged cross-wise to the rotational axis (D) of the shaft (8, 400) at the bush (12) or whereby the weld (22) is arranged in circumferential direction on a lateral surface of a cylindrical section (123) of the bush (12) and describes thereby a circumferential angle (α) between 100° and 200°.

11. Fixture arrangement according to one of the preceding claims, whereby at the first end of the shaft (8, 400) extending along a rotational axis (D) at least one projection (410a, 410b, 410c) projecting radial to the rotational axis from a first circumference (U1) of the shaft (8, 400) for obtaining a positive operative connection, which comprises two shoulders (411, 412), which continue at least sectionally parallel to each other and are operatively connected with a first driving element (6A, 201).

12. Fixture arrangement according to claim 11, whereby the shaft (8, 400) comprises in direction of the rotational axis (D) insertion slopes (414, 415) for inserting the shaft (8, 400) into the cavity (16, 210) of the first driving element (6A, 201).

13. Method for assembling a fixture arrangement for a seat, in particular for a vehicle seat, whereby the fixture arrangement comprises
- a first and a second fixture (2, 200, 300) each of which comprises a first and a second driving element (6A, 6B, 201), each of which has a cavity (16, 210) with an internal contour,
- a shaft (8, 400) connecting the two fixtures (2, 200, 300) and
- an adjusting element (10, 500) for operating the fixtures (2, 200, 300),
whereby the shaft (8, 400) is positively and torque-proved inserted with its first end into the cavity (16, 210) of the first driving element (6A, 201) and on both sides of the second fixture (2, 300) the shaft (8, 400), the second driving element (6B, 201) and the adjusting element (10, 500) are to be brought into an intermediate mounted position, in which the second driving element (6B, 201), the shaft (8, 400) and the adjusting element (10, 500) are rotatable to each other and can be positioned in a desired rotational position towards each other and whereby subsequently the shaft (8, 400), the second driving element (6B, 201) and the adjusting element (10, 500) are connected to each other torque-proofed in the desired rotational position,
whereby the shaft (8, 400), the second driving element (6B, 201) and the adjusting element (10, 500) are connected with each other by a bush (12) which is positively inserted into the cavity (16, 210) of the second driving element (6B, 201) as the second end of the shaft (8, 400) and the adjusting element (10, 500) are inserted into the bush (12).

14. Method according to claim 13, whereby for obtaining a positive operative connection the shaft (8, 400) extending along a rotational axis (D) comprises in the area of the first end (401) at least one projection (410a, 410b, 410c) projecting radially to the rotational axis (D) from a first circumference (U1) of the shaft (8, 400) for engaging into a cavity (16, 210) of the driving element (6A, 201) of the first locking fixture (2, 200), whereby the at least one projection (410a, 410b, 410c) comprises two shoulders (411, 412) which at least sectionally continue parallel to each other, whereby the shaft (8, 400) is inserting into the cavity (16, 210) of the driving element (6A, 201) of the first locking fixture (2, 200) for mounting such that the shoulders (411, 412) are operatively connected with the cavity (16, 210) of the driving element (6A, 201), whereby in the intermediate mounted position the shaft (8, 400) is movable in direction of the rotational axis (D) relative to the first locking fixture (2, 200) and is rotatable around the rotational axis (D) relative to the second locking fixture (2, 300).

15. Method according to claim 14, whereby in a final assembly position the shaft (8, 400) is firmly bonded or positively connected with the driving element (6B, 201) of the second locking fixture (2, 300).

## Revendications

1. Dispositif à armature, pour un siège, plus particulièrement pour un siège de véhicule, avec une première et une deuxième armature (2 ; 200 ; 300), qui comprennent chacun un premier et un deuxième élément d'entraînement (6A, 6B ; 201), qui présentent chacun un évidement (16 ; 210) avec un contour interne, ainsi qu'avec un arbre (8 ; 400) reliant les deux armatures (2 ; 200, 300) et avec un élément de réglage (10 ; 500) pour l'actionnement des armatures (2 ; 200, 300),
- l'arbre (8 ; 400) présentant une première extrémité avec un contour externe (14) pour l'emboîtement avec complémentarité de forme dans le premier élément d'entraînement (6A ; 201) et une deuxième extrémité cylindrique,
- dans une position de montage intermédiaire, le deuxième élément d'entraînement (6B ; 201), la deuxième extrémité de l'arbre (8 ; 400) et l'élément de réglage (10 ; 500) pouvant être positionnés dans une position en rotation quelconque les uns par rapport aux autres et
- des moyens de fixation de la position en rotation entre l'arbre (8 ; 400), le deuxième élément d'entraînement (6B ; 201) et l'élément de réglage (10 ; 500) étant prévus de façon à ce que, dans une position de montage final, les deux éléments d'entraînement (6A, 6B ; 201), l'arbre (8 ; 400) et l'élément de réglage (10 ; 500) soient reliés entre eux de manière solidaire en rotation,
les moyens de fixation comprenant une douille (12) insérée par complémentarité de forme dans l'évidement (16 ; 210) du deuxième élément d'entraînement (6B ; 201), la deuxième extrémité de l'arbre (8 ; 400) et l'élément de réglage (10 ; 500) étant emboîtés dans la douille (12).

2. Dispositif à armature selon la revendication 1, l'élément de réglage (10 ; 500) étant conçu comme une tige d'adaptation pour la disposition d'un levier d'actionnement.

3. Dispositif à armature selon l'une des revendications précédentes, une liaison par pressage entre au moins deux des trois composants : arbre (8 ; 400), élément de réglage (10 ; 500) et deuxième élément d'entraînement (6B ; 201) étant prévue en tant que moyen de fixation de la position en rotation.

4. Dispositif à armature selon la revendication 3, au moins un des composants présentant une bordure (26 ; 502) pour la liaison par pressage à complémentarité de forme.

5. Dispositif à armature selon l'une des revendications 1 à 4, la douille (12) étant pressée ou soudée dans l'évidement (16 ; 210) du deuxième élément d'entraînement (6B ; 201).

6. Dispositif à armature selon la revendication 5, une liaison par continuité de matériau, plus particulièrement une liaison soudée, entre au moins deux des composants : arbre (8 ; 400), élément de réglage (10 ; 500), douille (12) et deuxième élément d'entraînement (6B ; 201), étant prévue comme moyen de fixation de la position en rotation.

7. Dispositif à armature selon la revendication 5 ou 6,
- l'élément de réglage (10 ; 500) présentant, du côté de l'extrémité, deux tenons (30A, 30B) se succédant dans la direction axiale, qui sont adaptés à la douille (12) ou à l'arbre (8 ; 400), ou
- l'élément de réglage (10 ; 500) et l'arbre (8 ; 400) étant emboîtés dans la douille (12) et liés à celle-ci par continuité de matériau ou
- l'élément de réglage (10 ; 500) comprenant un tenon long (24) inséré à travers la douille (12) et auquel est fixé l'arbre (8 ; 400).

8. Dispositif à armature pour un siège, plus particulièrement pour un siège de véhicule, avec
- une première armature (2 ; 200), qui comprend un premier élément d'entraînement (6A ; 201),
- une deuxième armature (2 ; 300), qui comprend un deuxième élément d'entraînement (6B ; 201),
- un arbre (8 ; 400) reliant la première et la deuxième armature (2 ; 200, 300), s'étendant le long d'un axe de rotation (D), qui présente une première extrémité reliée par complémentarité de forme avec le premier élément d'entraînement (6A ; 201) et une deuxième extrémité reliée avec le deuxième élément d'entraînement (6B ; 201),
- un élément de réglage (10 ; 500) pour l'actionnement des armatures (2 ; 200, 300) et
- une douille (12) qui relie la deuxième extrémité de l'arbre (8 ; 400), le deuxième élément d'entraînement (6B ; 201) et l'élément de réglage (10 ; 500) entre eux de manière solidaire en rotation et présente pour cela une liaison par continuité de matière,
**caractérisé en ce que**
la deuxième extrémité de l'arbre (8 ; 400) et l'élément de réglage (10 ; 500) étant insérés dans un alésage (122) de la douille (12).

9. Dispositif à armature selon la revendication 8, la liaison par continuité de matière (22) étant établie entre la douille (12) d'une part et l'arbre (8 ; 400) et/ou l'élément de réglage (10 ; 500) d'autre part.

10. Dispositif à armature selon la revendication 8 ou 9, la liaison par continuité de matière étant conçue comme une liaison soudée avec un cordon de soudure (22), ce cordon de soudure (22) étant disposé transversalement par rapport à l'axe de rotation (D) de l'arbre (8 ; 400) sur la douille (12) ou le cordon de soudure (22) étant disposé sur la circonférence d'une surface externe d'une portion cylindrique (123) de la douille (12) et décrit un angle (α) entre 100° et 200°.

11. Dispositif à armature selon l'une des revendications précédentes, sur la première extrémité de l'arbre (8 ; 400) s'étendant le long de l'axe de rotation (D), pour l'établissement d'une liaison fonctionnelle à complémentarité de forme, au moins une saillie (410a, 410b, 410c) dépassant radialement par rapport à l'axe de rotation d'une première circonférence (U1) de l'arbre (8 ; 400) est prévu, qui comprend deux flancs (411,412) qui s'étendent parallèlement au moins partiellement et qui sont en liaison fonctionnelle avec le premier élément d'entraînement (6A ; 201).

12. Dispositif à armature selon la revendication 11, l'arbre (8; 400) comprenant, en direction de l'axe de rotation (D), des chanfreins d'introduction (414, 415) pour l'introduction de l'arbre (8 ; 400) dans l'évidement (16 ; 210) du premier élément d'entraînement (6A ; 201).

13. Procédé de montage d'un dispositif à armature pour un siège, plus particulièrement pour un siège de véhicule, ce dispositif à armature comprenant :
- une première et une deuxième armature (2 ; 200, 300), qui comprennent chacune un premier et un deuxième élément d'entraînement (6A, 6B ; 201) qui présentent chacun un évidement (16 ; 201) avec un contour interne,
- un arbre (8 ; 400) reliant les deux armatures (2 ; 200, 300) et
- un élément de réglage (10 ; 500) pour l'actionnement des armatures (2 ; 200 ; 300), l'arbre (8 ; 400) étant inséré, avec sa première extrémité, dans l'évidement (16 ; 210) du premier élément d'entraînement (6A ; 201) par complémentarité de forme et de manière solidaire en rotation et, sur les côtés de la deuxième armature (2 ; 300), l'arbre (8 ; 400), le deuxième élément d'entraînement (6B ; 201) et l'élément de réglage (10 ; 500) étant placés dans une position de montage intermédiaire dans laquelle le deuxième élément d'entraînement (6B ; 201), l'arbre (8 ; 400) et l'élément de réglage (10 ; 500) étant rotatifs les uns par rapport aux autres étant positionnés les uns par rapport aux autres dans une position de rotation souhaitée et l'arbre (8 ; 400), le deuxième élément d'entraînement (6B ; 201) et l'élément de réglage (10 ; 500) étant ensuite reliés entre eux de manière solidaire en rotation dans la position de rotation souhaitée,
l'arbre (8 ; 400), le deuxième élément d'entraînement (6B ; 201) et l'élément de réglage (10 ; 500) sont reliés entre eux par l'intermédiaire d'une douille (12) qui est introduite par complémentarité de forme dans l'évidement (16 ; 210) du deuxième élément d'entraînement (6B ; 201), en insérant la deuxième extrémité de l'arbre (8 ; 400) et l'élément de réglage (10 ; 500) dans la douille (12).

14. Procédé selon la revendication 13, dans lequel, pour l'établissement d'une liaison fonctionnelle à complémentarité de forme, l'arbre (8 ; 400) s'étendant le long d'un axe de rotation (D) présente, au niveau de sa première extrémité (401), au moins une saillie (410a, 410b, 410c) dépassant radialement par rapport à l'axe de rotation (D) d'une première circonférence (U1) de l'arbre (8 ; 400), pour un emboîtement dans un évidement (16 ; 210) de l'élément d'entraînement (6A ; 201) de la première armature à encliquetage (2 ; 200), l'au moins une saillie (410a, 410b, 410c) présentant deux flancs (411, 412), qui s'étendent parallèlement au moins partiellement, l'arbre (8 ; 400) étant, pour le montage, inséré dans l'évidement (16 ; 210) de l'élément d'entraînement (6A ; 201) de l'armature à encliquetage (2 ; 200), de façon à ce que les flancs (411, 412) soient en liaison fonctionnelle avec l'évidement (16 ; 210) de l'élément d'entraînement (6A ; 201), l'arbre (8 ; 400) pouvant être coulissé, dans la position de montage intermédiaire, en direction de l'axe de rotation (D), par rapport à la première armature à encliquetage (2 ; 200) et autour de l'axe de rotation (D) par rapport à la deuxième armature à encliquetage (2 ; 300).

15. Procédé selon la revendication 14, l'arbre (8 ; 400) étant relié, dans une position de montage finale, par continuité de matière ou par complémentarité de forme, avec l'élément d'entraînement (6B ; 201) de la deuxième armature à encliquetage (2 ; 300).
